# EUROPEAN PATENT SPECIFICATION

(11) **EP 1 752 840 B1**
(45) Date of publication and mention of the grant of the patent: **21.01.2009**
(21) Application number: 06016614.7
(22) Date of filing: 09.08.2006
(51) Int. Cl.: G04G 9/00, G02F 1/167, G04B 45/00

(54) **Decorative member for a display panel**
Dekoratives Element für eine Anzeigevorrichtung
Elément decoratif pour un dispositif d'affichage

(30) Priority: 10.08.2005 JP 2005232056; 23.03.2006 JP 2006080512
(43) Date of publication of application: 14.02.2007
(73) Proprietor: Seiko Epson Corporation, Shinjuku-ku, Tokyo 163-0811 (JP)
(72) Inventor: Ozawa, Noriaki, Suwa-shi, Nagano-ken 392-8502 (JP)
(74) Representative: HOFFMANN EITLE

(56) References cited:
- WO-A-01/71433
- JP-A- 10 206 560
- US-A1- 2003 026 171
- US-A1- 2003 042 847
- US-A1- 2004 145 971
- US-A1- 2004 257 496
- US-A1- 2005 179 852

## Description

### BACKGROUND OF THE INVENTION

### 1. Field of technology

The present invention relates to technology for improving the appearance and readability of an electronic component and an electronic device having a display panel.

### 2. Description of Related Art

Various methods have been used to improve the readability of display panels used in electronic devices such as wristwatches that have a display panel. See, for example, Japanese Unexamined Patent Appl. Pub. H06-180377.

More specifically, Japanese Unexamined Patent Appl. Pub. 2004-294281, for example, teaches rendering a plurality of films in patterns on the bottom surface of a transparent substrate and varying the material and color of these films to achieve design variations in a timepiece dial that is manufactured using a transparent substrate.

Japanese Unexamined Patent Appl. Pub. 2005-91102 teaches rendering a window in the surface of the dial of a timepiece having a hybrid display comprising both a digital display and an analog display, and rendering a liquid crystal display device (LCD) in this window.

Yet further, Japanese Unexamined Patent Appl. Pub. 2004-228450 teaches adding design elements to each layer of a photoelectric conversion device comprising multiple layers.

A feature common to many LCD panels and other flat display panels is that the display appears flat, that is, two-dimensional. A problem, therefore, is that creating a sense of quality, and particularly high quality, is difficult even if ornamentation is rendered to the part containing the display panel. For example, even if the design is varied by varying the color and material of the dial, the design cannot be changed dynamically. Design changes also cannot be imparted by the design rendered in the layers of the photoelectric conversion device.

JP 10 206560 A describes a decorative member and its manufacture and a timepiece using the decorative member constituting a light transmissive member with an upper surface having a bumpy shape, a metal coat formed in a recess part and an EL panel 15 provided on the back surface of the light transmission member emitting light out of a tip end of a projection part 14 without a metal coat.

US 2004/0145971 A1 describes a watch having a faceplate that displays decorative image elements in a sequence of patterns. A top plate of an LCD panel for a watch has a plurality of symmetrical sectors. The watch comprises an analogue movement with a motor and a controller connected to the panel. The top plate of the panel is transparent and the individual sectors have individual electrodes. A display sequence is illustrated, in which image elements provide a pattern on the top plate.

US 2003/042847 A1 describes an ultraviolet ray emitting apparatus and electronic apparatus using ultraviolet ray emitting elements emitting ultraviolet rays from below to cause luminescent layers to emit coloured rays of light to provide a highly colourful and very ornamental display. A watch module may comprise an analogue function and a digital function. Hands and hour numerals are luminescent.

WO 01/71433 A describes an automatic location-detecting combination analogue and digital wristwatch. The wrist watch includes a 24-hour analogue display and a 12-hour digital display, an LCD display of the current phase of the moon and of local times of sunrise and sunset.

US 2003/0026171 A1 describes a flexible time piece in multiple environments. An electrophoretic display is used in a watch, allowing for a dynamic range of new shapes and environments of use. Several examples for incorporating a watch with an electrophoretic display in shoes, bags, belts and wallets are described. Further, it is described that conductive coatings may be made of a suitable conductive material, wherein the coatings or layers may be applied from a vaporous phase by electrolytic reaction or deposition from a disperse state such as spray droplets or dispersions in liquids. A display is created by printing the first conductive coating on a substrate, printing an electronic ink on the first conductive coating and printing a second conductive coating on the electronic ink.

US 2004/0257496 A1 describes a display device and manufacturing method, which is capable of three-dimensionally representing display on a liquid crystal display element. The liquid crystal display element includes a plurality of transparent electrodes. A lens panel is disposed on the bottom surface side of the liquid crystal display element. The respective lens portions are disposed in regions where transparent electrodes correspond to each other, and formed in the same shape as that of the respective regions.

WO 00/59327 describes a bracelet for displaying time and/or moving images. The bracelet has an active display made of a light emitting polymer. A base below the display layer provides strength and stability and a layer on top of the display layer is made of thin flexible transparent material to protect the display layer from water, dirt and other materials. The display layer may display the time or, in particular at the end zones thereof, decorative images.

### SUMMARY OF THE INVENTION

An object of the present invention is therefore to enable rendering a design of visual interest and improve the appearance of an electronic component and an electronic device comprising a display panel as well as to enable varying the appearance of the display panel and impart variation, dimension, and high quality to the decoration of an electronic component and an electronic device for presenting the time using a digital or an analog display.

This object is achieved by an electronic component having the features of claim 1 and by an electronic device having the features of claim 8.

An example comprises a display panel having an image retention characteristic; and a decorative member disposed layered to the display panel and visibly passing the display state of at least a portion of the display panel. By disposing a decorative member in a separate layer on a display panel having an image retention characteristic, at least a part of the image displayed on the display panel can be seen through the decorative member. The displayed imaged can therefore be seen floating three-dimensionally, and the appearance of a three-dimensional display can be achieved. The appearance of the image can also be changed by changing the properties of the decorative member (transparency, refractivity, color, surface configuration, an the visible light reflectivity of the surface), and the freedom of design can be greatly improved. Furthermore, if the image displayed on the display panel is changed, the change appears three-dimensionally through the decorative member, and a highly distinctive display can be provided. Variation can also imparted to the display on the display panel so that meaning can be given to a particular display area by, for example, highlighting a part of the display on the display panel.

Preferably, a three-dimensional shape is formed on a surface of the decorative member. This enables images displayed on the display panel to appear more three-dimensionally through the decorative member. Furthermore, because the appearance of the image changes greatly according to the three-dimensional shape of the decorative member and the angle at which the decorative member is viewed, the distinctiveness and decorativeness can be further enhanced. More particularly, a sense of quality and material completely different from the surface of the display panel can be created depending on the three-dimensional configuration of the surface of the decorative member.

Yet further preferably, recessed portions comprising a plurality of sides of different slope are formed in at least a portion of a surface of the decorative member. By varying the angle of the plural slopes forming these recessed portions, the appearance of displayed images changes greatly according to the direction and angle at which the recessed portions are viewed, and an even more distinctive appearance can be achieved.

In another aspect of the invention the decorative member is a flat member. This arrangement causes the decorative member and display panel to appear as a single component, thereby enhancing the visual effect of the decorative member and enabling easier assembly.

Further preferably, the decorative member is made from a moisture resistant material. This arrangement enables the decorative member to prevent moisture from entering and spreading in the electronic component, and thus improves the reliability of the display panel.

Yet further preferably, the display panel is an electrophoretic display panel. This arrangement enables three-dimensionally emphasizing display changes and presenting a more distinctive display by utilizing the unique display changes possible with an electrophoretic display panel, such as slowing the rate at which the display color changes to emphasize a change in density when changing the image displayed on the display panel. An electrophoretic display panel can also be easily rendered as a bendable, flexible panel, which when combined with the decorative effect of the decorative member affords an extremely high degree of design freedom and a highly distinctive electronic component.

Yet further preferably, a through-hole is provided for passing a drive member for driving analog hands when analog hands are provided. This arrangement enables rendering the display panel below analog hands functioning as a timepiece, and the analog hands and display panel can be used together to present a variety of designs.

An electronic component according to another aspect of the invention has a display panel comprising a display layer having an image retention characteristic, and a transparent layer covering the display side surface of the display layer; and a three-dimensional shape is rendered in the transparent layer of the display panel. By rendering a three-dimensional shape in the transparent layer of the display panel, this arrangement imparts a three-dimensional appearance to images displayed on the display panel, affords the visual effect of greatly changing how images appear depending on the three-dimensional shape of the transparent layer and the angle at which the display panel is viewed, and provides a highly distinctive and decorative electronic component. Furthermore, because the display layer on which images are displayed and the transparent layer having the three-dimensional shape are close, the visual effect afforded by the three-dimensional pattern is greatly enhanced.

An electronic device according to another aspect of the invention comprises a display unit comprising a display panel having an image retention characteristic, and a decorative member disposed layered to the display panel and visibly passing the display state of at least a portion of the display panel. By disposing a decorative member in a separate layer on a display panel having an image retention characteristic, at least a part of the image displayed on the display panel can be seen through the decorative member. The appearance of the image can also be changed by changing the properties of the decorative member, and the freedom of design can be greatly improved. Furthermore, if the image displayed on the display panel is changed, the change appears three-dimensionally through the decorative member, and a highly distinctive display can be provided. Variation can also imparted to the display on the display panel so that meaning can be given to a particular display area by, for example, highlighting a part of the display on the display panel.

Preferably, a three-dimensional shape is formed on a surface of the decorative member. This enables images displayed on the display panel to appear more three-dimensionally through the decorative member. Furthermore, because the appearance of the image changes greatly according to the three-dimensional shape of the decorative member and the angle at which the decorative member is viewed, the distinctiveness and decorativeness can be further enhanced. More particularly, a sense of quality and material completely different from the surface of the display panel can be created depending on the three-dimensional configuration of the surface of the decorative member.

Further preferably, analog hands that are driven above the display area of the display unit for indicating time are also provided. A time display using the analog hands can be combined with the display state of the display panel to render a distinctive three-dimensional display and a highly decorative time display.

Yet further preferably, analog hands that are driven above the display area of the display unit for indicating time are also provided, and an image is displayed on the display panel in an area overlapping the drive range of the analog hands. A three-dimensional, highly distinctive display can therefore be presented behind the analog hands, and decorativeness can thus be further enhanced. Variation can also imparted to the display so that meaning can be given to a particular display area behind the hands by, for example, highlighting a part of the display on the display panel.

Preferably, time is digitally displayed by the display panel. This arrangement enables displaying the time in a digital display by means of a display panel having an image retention characteristic, and the combination of ornamentation afforded by the decorative member disposed over the display panel and the digital display enables changing the ornamentation and affording a feeling of high quality.

Preferably, the electronic device is a timepiece having the display unit disposed inside a timepiece case. With this arrangement the time can be digitally displayed, for example, on a display panel having an image retention characteristic, and the display panel can be decoratively enhanced by the decorative member. Thus combining this decorative member with a digital display affords design variations, a three-dimensional appearance, and a feeling of high quality.

Yet further preferably, the display unit, analog hands driven above a display area of the display unit, and a movement for driving the analog hands are disposed inside a timepiece case; and a through-hole is rendered in the display panel to pass a drive member for transferring drive power from the movement to the analog hands. This arrangement enables disposing a display panel behind analog hands functioning as a timepiece, and affords various display designs using the analog hands and the display panel.

The display panel is preferably an electrophoretic display device. This arrangement enables three-dimensionally emphasizing display changes and presenting a more distinctive display by utilizing the unique display changes possible with an electrophoretic display panel, such as slowing the rate at which the display color changes to emphasize a change in density when changing the image displayed on the display panel. An electrophoretic display panel can also be easily rendered as a bendable, flexible panel, which when combined with the decorative effect of the decorative member affords an extremely high degree of design freedom and a highly distinctive electronic component.

Further preferably, the display panel comprises a special display unit for presenting a special display including a moon phase display; and the portion of the decorative member overlapping the special display unit is rendered as a through-hole or transparent window, and the portion of the decorative member not overlapping the special display unit is opaque. This arrangement enables the moon phases, for example, displayed by the display panel to be seen through the through-hole or transparent window, and affords a feeling of three-dimensionality and quality with even greater design variety overall.

Yet further preferably, one or a plurality of complementary decorative members is disposed to the surface of the decorative member; and the display panel displays in an area surrounding the complementary decorative member. Thus comprised, the combination of complementary decorative members on the main decorative member and the display of the display panel around the complementary decorative members enables displaying an even greater variety of characters and symbols, and a feeling of high quality.

Further preferably, one or a plurality of recessed portions is formed on a surface of the decorative member; and the display panel displays in areas corresponding to the recessed portions. The display panel displays in areas corresponding to the recessed portions formed in the decorative member in this arrangement, and by combining the ornamentation afforded by the recessed portions formed in the decorative member with the display presented by the display panel, the design can be improved and a three-dimensional, high quality feel can be achieved.

Further preferably, the decorative member is made from a moisture resistant material. This arrangement enables the decorative member to prevent moisture from entering and spreading in the electronic component, and thus improves the reliability of the display panel.

Other objects and attainments together with a fuller understanding of the invention will become apparent and appreciated by referring to the following description and claims taken in conjunction with the accompanying drawings.

### BRIEF DESCRIPTION OF THE DRAWINGS

FIG. 1 is a front view of a wristwatch according to a first embodiment of the invention.
FIG. 2 is a side section view of the wristwatch.
FIG. 3 shows the movement of the wristwatch.
FIG. 4 is a section view describing the arrangement of the display panel in the wristwatch.
FIG. 5 is a block diagram describing the electrical arrangement of the wristwatch.
FIG. 6 is an exploded oblique view of the major parts in the arrangement of the display unit.
FIG. 7 is a section view showing the major parts in the arrangement of the display unit.
FIG. 8 is a plan view showing an example of one view of the display unit.
FIG. 9 is an exploded oblique view [a section view, sic?] showing the major parts in the arrangement of the display unit.
FIG. 10 is a plan view showing an example of an image presented on the display panel.
FIG. 11 is a section view of the main parts in the arrangement of the display unit in a second embodiment of the invention.
FIG. 12 is a section view of main parts describing the arrangement of the display unit shown in FIG. 11.
FIG. 13 is a plan view showing an example of an image presented on the display panel.
FIG. 14 is a section view describing the arrangement of the display panel in a third embodiment of the invention.
FIG. 15 is an exploded oblique view showing the arrangement of the display unit in a fourth embodiment of the invention.
FIG. 16 is a side view showing the arrangement of the display unit shown in FIG. 15.
FIG. 17 is a side view showing an example of a method of manufacturing the display unit.
FIG. 18 is a side view showing an example of a method of manufacturing the display unit.
FIG. 19 is a side view showing an example of a method of manufacturing the display unit.
FIG. 20 is a side view showing an example of a method of manufacturing the display unit.
FIG. 21 is a front view of a wristwatch according to a fifth embodiment of the invention.
FIG. 22 is a section view through line II-II in FIG. 21.
FIG. 23 is a schematic section view of an example of an electrophoretic display device.
FIG. 24A shows an example of a combined display in the wristwatch shown in FIG. 21.
FIG. 24B shows an example of a combined display in the wristwatch shown in FIG. 21.
FIG. 25 is a front view of a wristwatch according to a sixth embodiment of the invention.
FIG. 26 is a section view through line VI-VI in FIG. 25.
FIG. 27 is a view from the front of the display panel shown in FIG. 26.
FIG. 28 shows an example of displaying the moon phases in the wristwatch shown in FIG. 25.
FIG. 29A shows an example of the display in the wristwatch shown in FIG. 25.
FIG. 29B shows an example of the display in the wristwatch shown in FIG. 25.
FIG. 29C shows an example of the display in the wristwatch shown in FIG. 25.
FIG. 30 is a front view of a wristwatch according to a seventh embodiment of the invention.
FIG. 31 is a section view through line XI-XI in FIG. 30.
FIG. 32 is a front view of the display panel of the wristwatch shown in FIG. 30.

### DESCRIPTION OF THE PREFERRED EMBODIMENTS

Preferred embodiments of the present invention are described below with reference to the accompanying figures.

### Embodiment 1

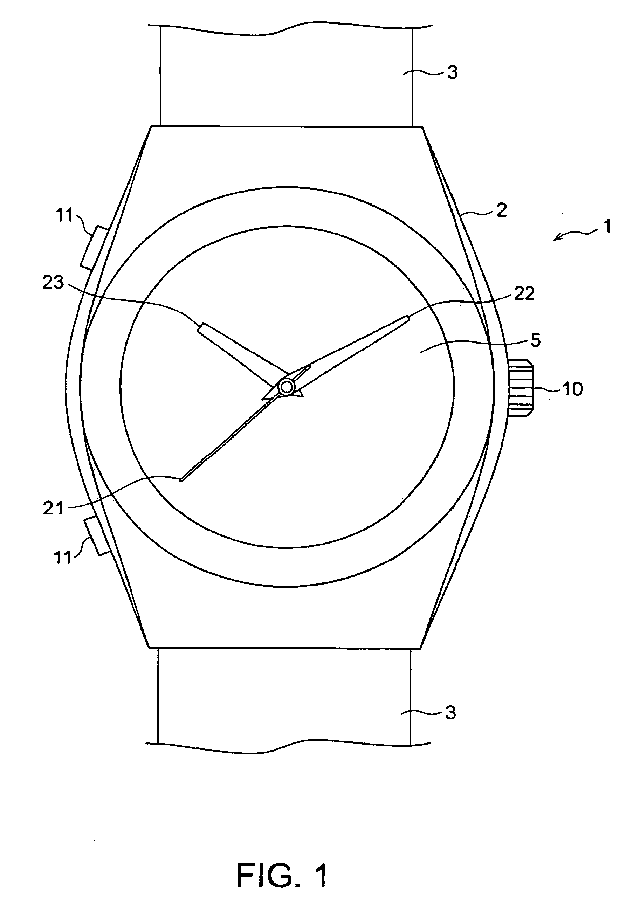

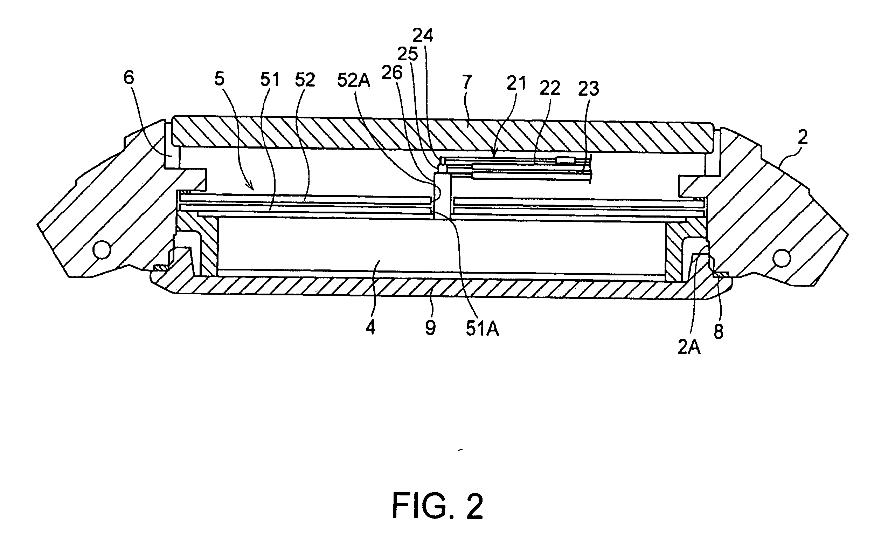

FIG. 1 is a front view of a wristwatch 1 according to a first embodiment of the invention. FIG. 2 is a side section view of this wristwatch 1. The wristwatch 1 has a watch case 2, and a wrist band 3 connected to the watch case 2. The watch case 2 is made of stainless steel or other metal, or from plastic or other synthetic material. As shown in FIG. 2, a through-hole 2A is rendered inside the watch case 2 for housing the movement 4 and a display unit 5 composing the dial.

A transparent glass or plastic crystal 7 is press fit with an intervening plastic or metal pressure ring 6 into one end (the face side) of the through-hole 2A in the watch case 2. A back cover 9 is screwed and secured with an intervening seal 8 to the other end (the back side of the timepiece) of the through-hole 2A. The back cover 9 and crystal 7 together seal the inside of the watch case 2.

A crown 10 and operating buttons 11 are disposed to the watch case 2 as shown in FIG. 1. The crown 10 is connected to the movement mechanism 20 described further below through the stem (not shown in the figure) and time-adjusting gear (not shown in the figure) in the movement 4. Rotating the crown 10 causes the time-adjusting gear to turn, thereby turning the minute hand 22 and hour hand 23 and adjusting the time.

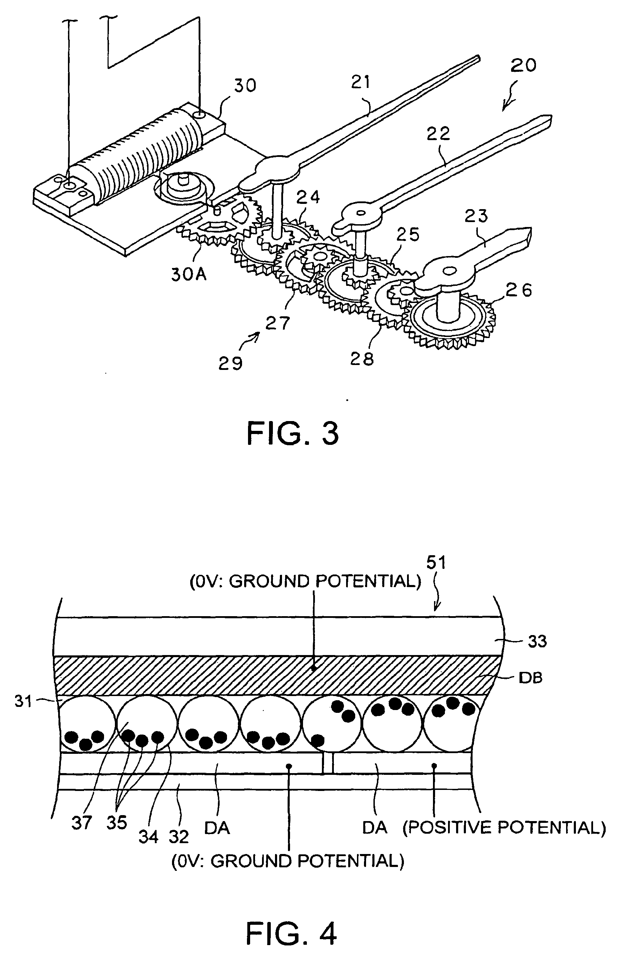

As shown in FIG. 3, the movement 4 comprises a movement mechanism 20 interlinking the second hand 21, minute hand 22, and hour hand 23. The analog hands 21 to 23 are rotationally driven by the movement mechanism 20 and function as a time display unit for displaying the current time. The movement mechanism 20 has a gear train 29 causing the seconds wheel 24, second wheel 25, and center wheel 26 to work together by means of intermediate wheels 27 and 28. One end of the second hand 21 is secured to the rotating shaft of the seconds wheel 24, one end of the minute hand 22 is secured to the rotating shaft of the second wheel 25, and one end of the hour hand 23 is secured to the rotating shaft of the center wheel 26. The drive gear 30A of the drive motor 30 meshes with the seconds wheel 24. The seconds wheel 24 is therefore driven rotationally by rotation of the drive motor 30, this rotation is passed to the second wheel 25 and center wheel 26, and the second hand 21, minute hand 22, and hour hand 23 are thereby driven circularly. This sequence of operations causes the analog hands 21 to 23 to display the time.

Note that for ease of description the seconds wheel 24, second wheel 25, and center wheel 26 are shown separated from each other in FIG. 3, but in practice these wheels are disposed concentrically as shown in FIG. 1.

The display unit 5 rendered as an electronic component is disposed in front of the movement 4 on the face side of the timepiece as shown in FIG. 2. This display unit 5 has a decorative member 52 rendered as ornamentation on top of the display panel 51. A through-hole 51A is formed in the middle of the display panel 51, and a through-hole 52A is formed in the middle of the decorative member 52. The shafts of the seconds wheel 24, second wheel 25, and center wheel 26 of the movement 4 protrude from these through-holes 51A and 52A, and the second hand 21, minute hand 22, and hour hand 23 are attached to the ends of these exposed shafts. The seconds wheel 24, second wheel 25, and center wheel 26 of the movement mechanism 20 function as drive members for transferring the drive force of the drive motor 30.

An electrophoretic display panel having a display retention characteristic is used as the display panel 51. The display panel 51 displays various kinds of images including characters and patterns (referred to below as simply "images"). The display panel 51 is described below as a segment display panel.

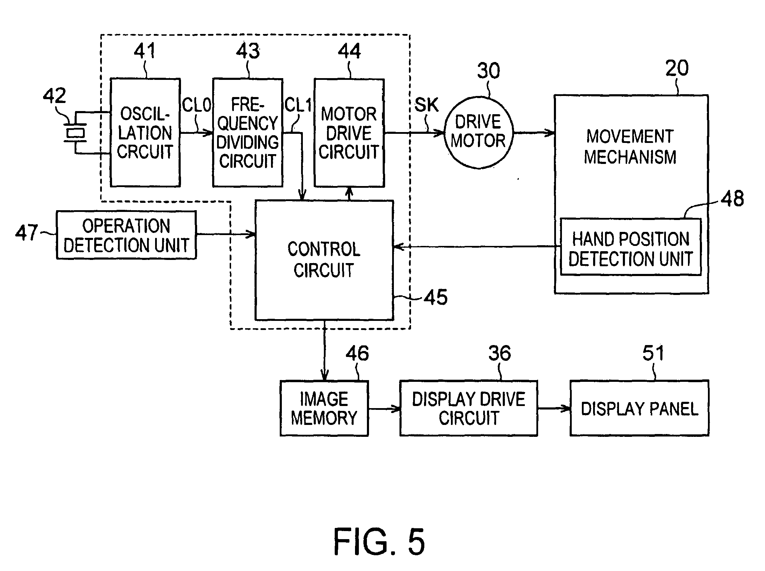

As shown in FIG. 4, the display panel 51 has an electrophoresis layer 31 as a display layer disposed between a packaging substrate 32 and an opposing transparent substrate 33. Segment electrodes DA are disposed on top (that is, on the transparent substrate 33 side) of the packaging substrate 32, and transparent electrode DB is formed on the bottom (that is, on the packaging substrate 32 side) of the transparent substrate 33 by, for example, vapor deposition of ITO (indium-tin oxide) or other transparent conductor material. The display drive circuit 36 (FIG. 5) further described below is connected to the these electrodes DA and DB.

The electrophoresis layer 31 is composed of a plurality of microcapsules 34, and the microcapsules 34 are filled with an electrophoretic dispersion 37 containing electrophoretic particles 35. The electrophoretic particles 35 are, for example, positively charged blue particles and the electrophoretic dispersion 37 is colored white, rendering a so-called one-particle electrophoretic layer.

When the display drive circuit 36 holds the transparent electrode DB at 0 V (ground potential) and supplies a positive drive voltage causing a particular segment electrode DA to go to a positive potential, an electric field is created from the segment electrode DA to the transparent electrode DB. This field causes the positively charged electrophoretic particles 35 (blue particle) inside the microcapsules 34 to move to the transparent electrode DB side, and causes the white electrophoretic dispersion 37 to move to the segment electrode DA side. The microcapsules 34 visible from the transparent substrate 33 side therefore appear blue, and the segment therefore displays blue.

Conversely, when the display drive circuit 36 causes the transparent electrode DB to go to a positive potential and holds a particular segment electrode DA at 0 V, the positively charged electrophoretic particles 35 (blue particle) move to the segment electrode DA side, and the white electrophoretic dispersion 37 therefore moves to the transparent electrode DB side. The microcapsules 34 visible from the transparent substrate 33 side therefore display white, and the segment displays white.

If a potential difference is not created between the transparent electrode DB and segment electrode DA, the electrophoretic particles (blue particles) 35 [32, sic] do not move, the display color of the segment therefore does not change, and the previous display state is retained.

In this and the other embodiments of the invention described below the display drive circuit 36 has an internal booster circuit to boost the voltage (such as 3 V or 1.5 V) supplied from the power source to produce a +12 V voltage, and supplies this +12 V voltage or 0 V as the drive voltage to the segment electrodes DA and transparent electrodes DB.

FIG. 5 shows the electrical arrangement of this wristwatch 1.

The oscillation circuit 41 causes an oscillator 42 to oscillate and output reference clock signal CL0 (a 32-kHz signal in this embodiment of the invention). The frequency dividing circuit 43 frequency divides the reference clock signal CL0 [CL1, sic] to 1 Hz, for example, and outputs a 1-Hz clock signal CL1 to the control circuit 45. The motor drive circuit 44 is controlled by the control circuit 45 and supplies drive signal SK to the drive motor 30 to drive the movement mechanism 20 and move the second hand 21, minute hand 22, and hour hand 23 circularly.

The control circuit 45 centrally controls the wristwatch 1 and comprises a CPU, ROM, and RAM. The CPU runs a control program stored in ROM to control the parts of the wristwatch 1. The control circuit 45 also has a timekeeping function for keeping a calendar (or keeping the time) by counting a signal of a predetermined frequency output from the frequency dividing circuit 43 by means of a software process or a hardware arrangement (using counters, for example). To display calendar information on the wristwatch 1, the calendar information output by the timekeeping function of the control circuit 45 is written to image memory 46, and the display drive circuit 36 displays an image corresponding to the calendar information on the display panel 51.

The operation detection unit 47 detects and reports operation of the operating buttons 11 to the control circuit 45. Based on the operation of the operating buttons 11 detected by the operation detection unit 47, the control circuit 45 controls changing the image displayed on the display panel 51, for example.

The wristwatch 1 also has a hand position detection unit 48 for detecting the positions of the second hand 21, minute hand 22, and hour hand 23. The hand position detection unit 48 detects and reports the rotational positions of the analog hands 21 to 23 to the control circuit 45. Rotation detection by the hand position detection unit 48 can be accomplished by a method using a rotation detector (such as a rotary encoder), or a method of optically or electrically detecting the rotational position of the analog hands 21 to 23. Methods using a rotation detector include absolute methods that divide rotation of the hour hand 23 in 86,400 or 43,200 parts, rotation of the hour hand 23 in 24 parts or 12 parts, rotation of the minute hand 22 in 60 parts, or rotation of the second hand 21 in 60 parts, and relative methods. Methods of electrically sensing the position of the analog hands 21 to 23 include both contactless and contact methods.

The hand position detection unit 48 is not limited to an arrangement using a rotation detector. An arrangement that uses an internal counter to keep (count) the same time that is displayed by the analog hands, and detects the position of the analog hands from the value of this internal counter can alternatively be used.

Methods of driving the gear train 29 of the movement mechanism 20 by rotating the crown 10 to adjust the displayed time include manual methods whereby the crown 10 directly drives the gear train 29, and electronic methods whereby the control circuit 45 detects rotation of the crown 10 and drives the drive motor 30 by means of the motor drive circuit 44 an amount corresponding to how much the crown 10 was turned to set the time.

The circuit components shown in FIG. 5 can be packaged as desired. For example, the plural circuits enclosed in the dotted line in FIG. 5 (that is, control circuit 45, oscillation circuit 41, frequency dividing circuit 43, and motor drive circuit 44) can be rendered in a single integrated circuit device. Alternatively, the image memory 46 and display drive circuit 36 can be rendered in the same IC device, or the above-noted plural circuits and the image memory 46, display drive circuit 36, and control circuit 45 can be rendered in a single IC device.

This wristwatch 1 also comprises a button battery or other type of primary battery (not shown in the figure), and the wristwatch 1 is driven by power from this primary battery.

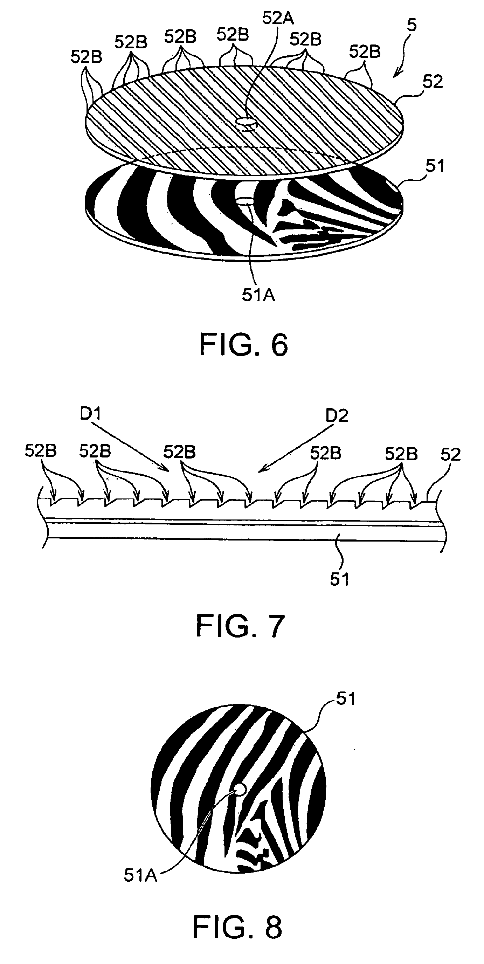

The arrangement of the display unit 5 is described in further detail next. FIG. 6 is an exploded oblique view showing the arrangement of the display unit 5, FIG. 7 is a section view of the main part of the display unit 5, and FIG. 8 shows a sample display that can be presented on the display panel 51.

As described above, the display unit 5 has a decorative member 52 rendered on the front (display side) of the display panel 51. The decorative member 52 is a flat transparent member made from glass or a plastic material such as acrylic or polycarbonate, and is bonded by a transparent adhesive (not shown in the figure) to the transparent substrate 33 (see FIG. 4) of the display panel 51.

A three-dimensional structure is formed on the surface of the decorative member 52. More specifically, a plurality of channels 52B, which are recesses for imparting a three-dimensional appearance, are formed parallel to each other in one direction on the surface of the decorative member 52. The channels 52B are substantially V-shaped grooves with two surfaces having a different slope and area. As a result, images displayed on the display unit 5 appear differently when viewed from the direction indicated by arrow D1 in FIG. 7, that is, when viewed from opposite one side of the channels 52B, and when viewed from the direction indicated by arrow D2, that is, when viewed from the other side. When a pattern (such as zebra stripes in this example) is displayed by the display panel 51 as shown in FIG. 8, for example, part of the pattern appears to be floating when the display unit 5 is viewed from the front. How much the pattern appears to be floating varies according to the thickness of the decorative member 52, the refractive index, the depth of the channels 52B, the slope and area of the sides of the channels 52B, and the angle at which the display unit 5 is viewed. Images that tend to seem flat when displayed on the display panel 51 therefore have a three-dimensional appearance, and the image appearance changes according to the direction and angle at which the image is viewed.

Images presented on the display panel 51 thus have a three-dimensional appearance as a result of rendering a decorative member 52 on the display panel 51. In addition, forming channels 52B on the surface of the decorative member 52 has the unique visual effect of changing the appearance of the image depending upon the direction the display unit 5 is viewed. A richly variable appearance can therefore be provided, and aesthetic appeal can be significantly improved, by using this display panel 51.

Furthermore, the display can also be nicely varied by using the decorative member 52 to change how all or part of the display panel 51 appears. Meaning can also be imparted to a particular display area by, for example, highlighting a part of the display on the display panel 51.

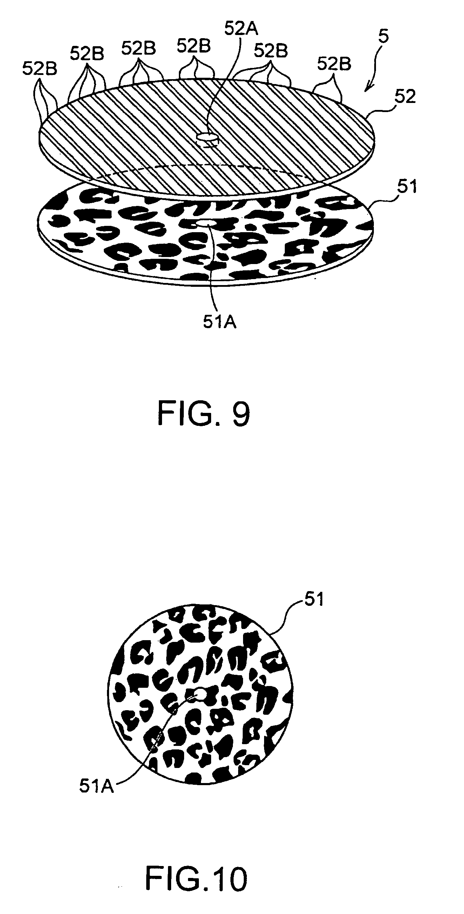

As shown in FIG. 9 and FIG. 10, when a different pattern (leopard spots in this example) is displayed on the display panel 51, the pattern also appears to be floating when seen from the front of the display unit 5, and also appears differently depending on the direction from which the pattern is viewed.

As described above, in a wristwatch 1 according to this first embodiment of the invention the display unit 5 rendering the dial comprises a display panel 51 and a decorative member 52 so that images displayed on the display panel 51 are given a three-dimensional appearance by the decorative member 52.

Furthermore, when the appearance of the display varies and images displayed on the display panel 51 vary according to the surface configuration of the decorative member 52 and the angle at which the display unit 5 is viewed, these variations have a three-dimensional appearance. A highly distinctive, three-dimensional display can therefore be achieved. A variety of decorative effects can therefore be easily achieved, and the aesthetic appeal can be greatly improved, by varying the properties of the decorative member 52 (including the transparency, refractivity, color, surface configuration, and visible light reflectivity of the surface). An even more distinctive visual effect can also be achieved by continuously or intermittently changing the image displayed on the display panel 51.

Images displayed on the display panel 51 can also be varied, and particular meaning can also be imparted to a specific display area by, for example, highlighting a particular part of the display panel 51.

Furthermore, by rendering the channels 52B on the surface of the decorative member 52 in a regular pattern, images displayed on the display panel 51 appear more three-dimensionally and the images change greatly in appearance depending on the viewing angle, and the distinctiveness and decorativeness of the display can be yet further improved. More particularly, because the channels 52B are grooves comprising a plurality of slopes of different angles, the image displayed on the display panel 51 is presented differently on each of the plural surfaces. The displayed image therefore varies greatly depending on the angle at which the display unit 5 is viewed, and the distinctiveness of the display is further enhanced. Yet further, disposing the decorative member 52 over the transparent substrate 33 affords a sense of quality and material completely different from the transparent substrate 33 forming the surface of the display panel 51, and thus affords outstanding design variation.

The display panel 51 is an electrophoretic display panel that uses electrophoretic particles 35. The characteristics of an electrophoretic display panel can therefore be used to achieve a highly distinctive display. For example, when changing the displayed image, the time, timing, pulse width, and level of the voltage applied to the segment electrode DA or transparent electrode DB can be changed to delay the rate at which the display in each segment changes, create differences in image density, and create other unique ways of changing the display. Furthermore, these unique display changes are three-dimensionally enhanced by the decorative member 52, affording an even more distinctive display.

Furthermore, using an electrophoretic display panel for the display panel 51 enables using a flexible, bendable display which when combined with the decorative effect of the decorative member 52 affords an extremely high degree of design freedom and a highly decorative wristwatch 1.

The wristwatch 1 can also three-dimensionally display different images below the area where the analog hands 21 to 23 move, thus affording designs that are richly distinctive, highly decorative, and visually effective.

Furthermore, because the decorative member 52 is flat, the display panel 51 and decorative member 52 appear as one, the visual effect is great, and manufacturability is greatly improved.

The inclined surfaces of the channels 52B can be smooth or frosted, for example. If the surfaces are smooth, the reflection of external light creates a complex luster, and enables a display that appears more three-dimensional and rich in variety because images are presented by the display panel 51 differently from the appearance of the images on the decorative member 52. Furthermore, if the slopes of the channels 52B are frosted, images displayed on the display panel 51 are softened and the surface of the decorative member 52 is exaggerated.

The channels 52B in this first embodiment of the invention can be substantially U-shaped forms having opposing vertical sides and a curved portion, or the channels can be grooves with three or more sides, or the channels can be grooves with a combination of sloped, vertical, and horizontal surfaces.

The channels 52B are also rendered aligned in one direction on the surface of the decorative member 52 in this first embodiment of the invention, but the invention is not so limited. The channels 52B can be rendered as intersecting lateral and longitudinal grooves in the surface of the decorative member 52, for example. The channels 52B are rendered in this way in the second embodiment of the invention described below.

### * Second embodiment

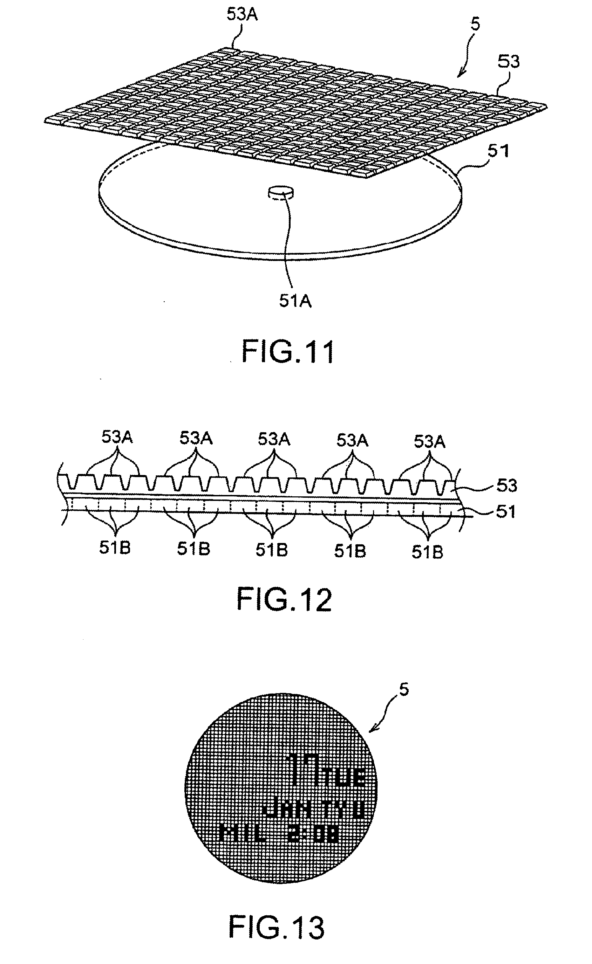

FIG. 11 is an exploded oblique view showing the arrangement of the display unit 5 in a second embodiment of the invention, FIG. 12 is a section view of major parts in the second embodiment, and FIG. 13 is a plan view showing a view of the display unit 5.

The decorative member 53 disposed as ornamentation according to this second embodiment of the invention is a flat member rendered on the surface of the display panel 51 in the same way as the decorative member 52 described above. A multitude of intersecting lateral and longitudinal grooves (intersecting perpendicularly in this example) are formed in the surface of the decorative member 53. The interval between these grooves is constant, resulting in a matrix of substantially square trapezoidal pieces 53A arrayed on the surface of the decorative member 53.

As described above, the display panel 51 is a segment display panel. In this second embodiment of the invention the plural segments 51B are larger than in the first embodiment and are substantially the same size as the pieces 53A. The segments 51B and pieces 53A are positioned so that the segments 51B are directly below the corresponding pieces 53A.

When the display unit 5 according to this second embodiment of the invention is viewed from the front, each of the pieces 53A appears as a single display element (pixel) presenting blue or white according to the display status (blue or white) of the segment 51B below the display piece 53A. The pieces 53A of the decorative member 53 have the effect of causing the color of the underlying segments 51B to appear raised above the surface so that images displayed on the flat display panel 51 appear in an array of three-dimensional blocks rendered by the pieces 53A presenting blue or white. Furthermore, the color displayed by the underlying segments 51B is also projected into the grooves formed in the decorative member 53, that is, onto the sides of the pieces 53A, thereby affording a more complex, richly varied display. As a result, the display unit 5 presents a three-dimensional segment display. Similarly to the inclined sides of the channels 52B described above, the sides of these pieces 53A can be smooth or a frosted glass surface.

While there is one segment 51B rendered for one piece 53A in this second embodiment of the invention, the invention is not so limited. For example, a plurality of segments 51B can be disposed to one piece 53A, or one segment 51B can be sized to cover a plurality of pieces 53A.

### * Third embodiment

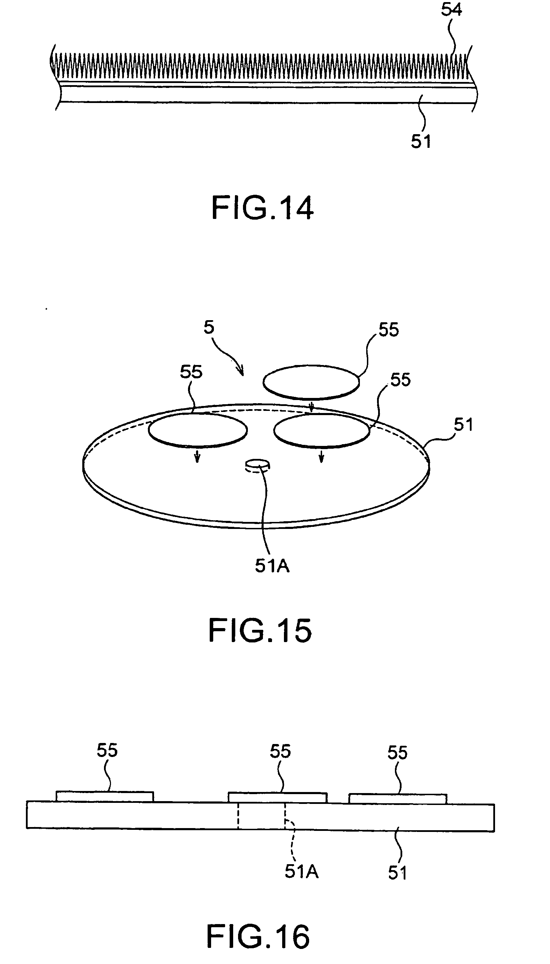

FIG. 14 is a section view showing the arrangement of the display unit 5 in a third embodiment of the invention. As shown in FIG. 14 a decorative member 54 having a multitude of whisker-like projections can be disposed for ornamentation on the surface of the display panel 51.

Whiskers having a fine diameter and pointed tip are arrayed on the surface of the decorative member 54. The surface of the decorative member 54 thus appears to be covered with hair. If a pattern (FIG. 8, FIG. 10) such as shown in the first or second embodiments is displayed on the display panel 51 using this decorative member 54, the appearance is significantly different from the surface of the display panel 51. In addition, an animated display can be achieved by continuously changing the image displayed on the display panel 51 so that the image, such as shown in FIG. 8 or FIG. 10, appears to move in a specific direction. By displaying images appropriate to the surface configuration of the decorative member on the display panel 51, the dial of the wristwatch 1 can be given an extremely rich, distinctive quality.

Embellishing the appearance of the wristwatch 1 is not limited to the method described in this third embodiment of the invention and can be varied in many ways by suitably changing the color, texture, visible light reflectivity, visible light transmittance, and the shape of the asperities rendered on the surface of the decorative member 52, 53, 54. By rendering the surface of the decorative member 52, 53, 54 with a highly polished mirror surface, the display unit 5 can be made to appear like metal, and by coloring the decorative member 52, 53, 54 to the extent that light transparency is not greatly impaired, a colored surface with the metallic luster of gold, silver, or dark silver, for example, can be achieved. By then displaying an image appropriate to this metallic luster on the display panel 51, a visual effect that makes the display unit 5 appear to have a deep, textured surface can be achieved.

### * Fourth embodiment

FIG. 15 is an exploded oblique view showing the arrangement of a display unit 5 according to a fourth embodiment of the invention, and FIG. 16 is a side view.

The decorative member 55 disposed on the surface of the display panel 51 in the display unit 5 of this fourth embodiment of the invention is smaller than the display panel 51. The decorative member 55 provided as decoration is round and three decorative members 55 are provided in this fourth embodiment of the invention, but the number of decorative members 55 disposed to one display panel 51 is not specifically limited.

The decorative members 55 are flat members with transparency similar to decorative members 52, 53 described above. By providing this decorative member 55 in only part of the display panel 51, the decorative member 55 causes the displayed image to appear three-dimensionally in only part of the display panel 51, thus affording a visual effect different from that achieved in the first and second embodiments and providing a new method of embellishing the wristwatch 1.

### * Manufacturing the display unit

The decorative members 52, 53, 54, 55 in the first to fourth embodiments are bonded by adhesive to the display panel 51 to render a display unit as an electronic component, but the invention is not limited to this method. Examples of methods of fastening a decorative member to the display panel 51 and forming the display unit are further described below.

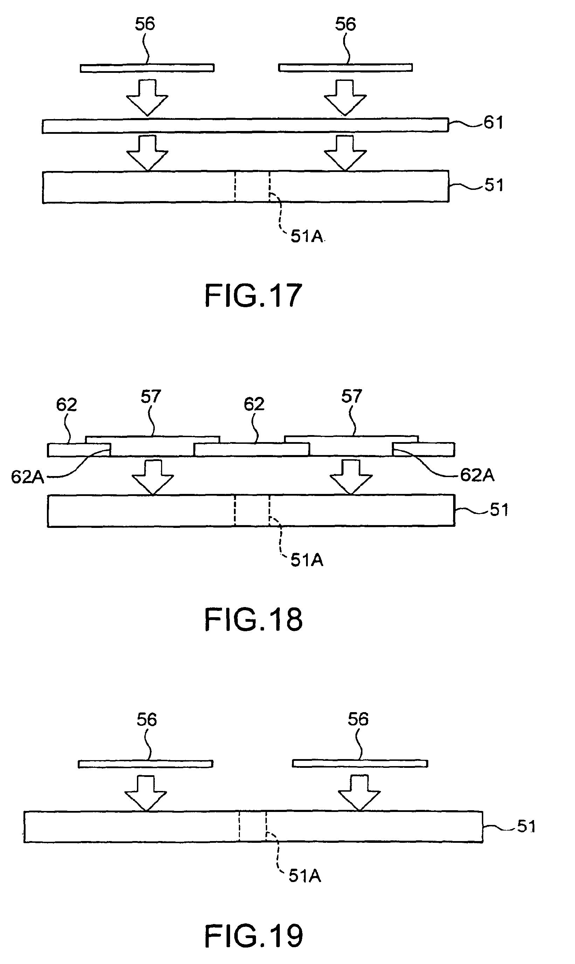

FIG. 17 to FIG. 19 describe a method of fastening the decorative member to the display panel 51. Note that decorative members 56 and 57 shown in FIG. 17 to FIG. 19 are identical to the decorative members 52, 53, 54, 55 described above.

The method shown in FIG. 17 fastens the decorative [surface, sic] member 56 to the display panel 51 with an intervening transparent plate 61. An advantage of this method is that loss is reduced if there is a work defect when a plurality of decorative members 56 are used. More specifically, if the decorative members 56 are affixed directly to the display panel 51 and one of the decorative members 56 is not correctly affixed, the display panel 51 must be scrapped. With the method shown in FIG. 17, however, only the transparent plate 61 and affixed decorative members 56 are scrapped, and loss is therefore reduced in terms of both waste volume and cost.

Alternatively, the decorative members 57 are fit into holes 62A provided in a transparent plate 62, and the transparent plate 62 is then affixed to the display panel 51. An advantage of this method is that the decorative members 57 can be easily and strongly secured. The distance between the decorative members 57 and the display panel 51 is also small, and the visual effect afforded by the decorative member 57 can be easily achieved. The thickness of the transparent plate 61, 62 used in the methods shown in FIG. 17 and FIG. 18 is not specifically limited, but the distance between the decorative members and the display panel 51 decreases and the visual effect of the decorative members is enhanced as the thickness of the transparent plate 61, 62 decreases.

As shown in FIG. 19, the decorative members 56 can obviously be affixed directly to the display panel 51.

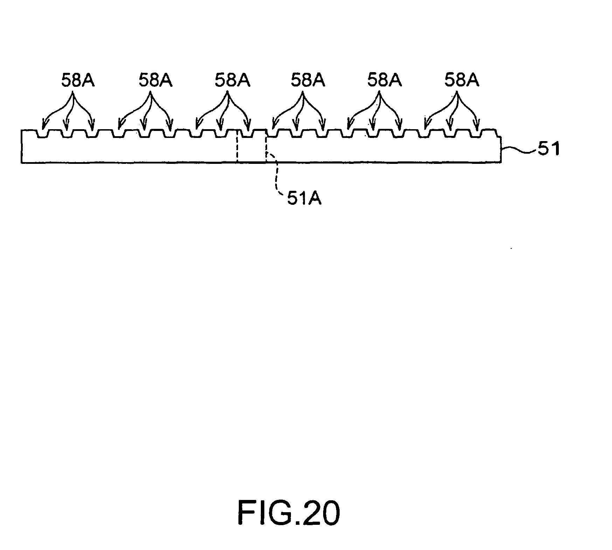

As shown in FIG. 20, the channels 58A can be formed directly in the surface of the display panel 51, that is, the transparent substrate 33 (see FIG. 4). When the method shown in FIG. 20 is used, the display panel 51 is the display unit. More specifically, the transparent substrate 33 disposed as a transparent layer of the display panel 51 also functions as the decorative member. This arrangement causes the displayed images to appear three-dimensionally as described with reference to FIG. 1 to FIG. 19, affords the visual effect of the appearance of the displayed image changing greatly depending on the three-dimensional configuration of the transparent substrate 33 and the angle at which the display panel 51, and provides an electronic component that is highly distinctive and decorative. The distance between the channels 58A and the segments of the display panel 51 displaying an image is also small with the arrangement shown in FIG. 20, thus easily achieving the visual effect of the channels 58A.

The method of affixing the decorative members 52, 53, 54 to the display panel 51 in the first to fourth embodiments can be any method that does not noticeably impair the transparency of the decorative members 52, 53, 54. For example, a transparent sheet that is adhesive on both sides can be used, an adhesive can be used, a recess that does not pass through can be rendered in the display panel 51 or the decorative member 52, 53, 54 and a matching protrusion that fits into this recess can be rendered to the other of the display panel 51 and decorative member 52, 53, 54 so that the display panel and decorative members are joined by fitting the protrusions into the holes. This also applies to the methods shown in FIG. 17 to FIG. 19.

### * Fifth embodiment

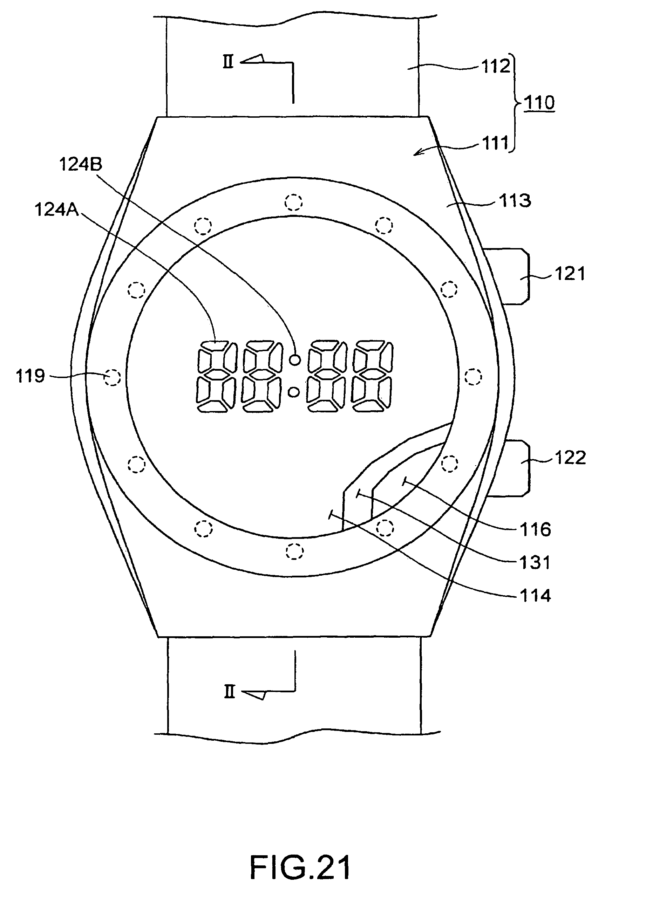

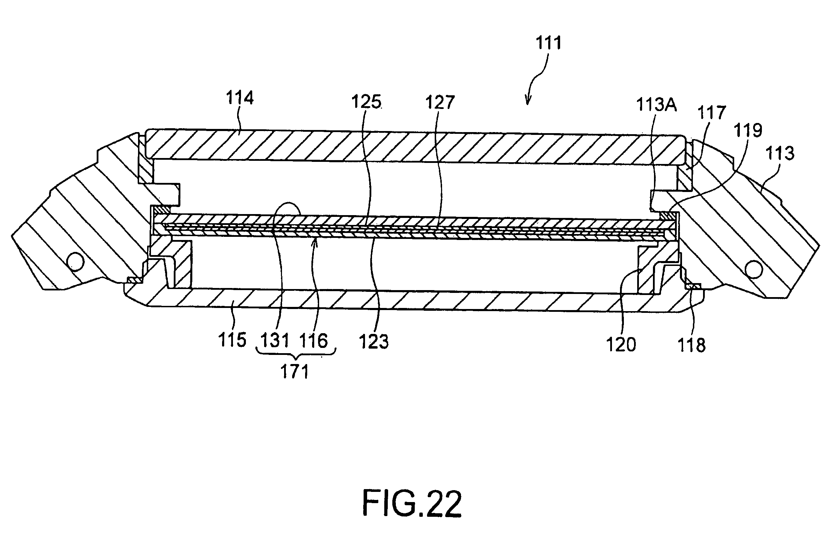

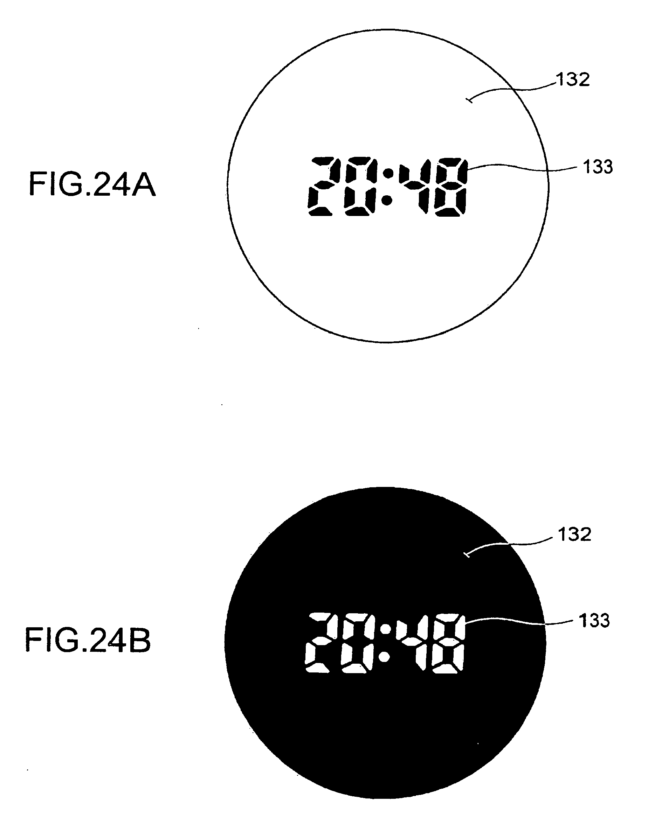

FIG. 21 to FIG. 24A and FIG. 24B show a wristwatch 110 according to a fifth embodiment of the invention. FIG. 21 is a front view of the wristwatch 110, and FIG. 22 is a section view through II-II in FIG. 21.

The wristwatch 110 has a timepiece 111 which is a digital timepiece in this embodiment, and a wristband 112 connected to the timepiece 111.

As shown in FIG. 22, the timepiece 111 houses a display panel 116 inside the watch case 113. The display panel 116 has a layered configuration with a decorative member 131 disposed proximally or attached to the surface of the display panel 116 for ornamentation. This display panel 116 displays the time (hour and minute) digitally.

As shown in FIG. 22, the watch case 113 has openings on the front and back sides. The opening on the front side is closed by a transparent crystal 114, and the opening on the back side is closed by a back cover 115. The display on the display panel 116 housed inside is visible through the transparent crystal 114.

When the decorative member 131 is stacked proximally to the display panel 116, there may be a gap of approximately of 2 mm, for example, between the decorative member 131 and display panel 116.

The watch case 113 and back cover 115 are made from brass, stainless steel or other metal, or plastic, and the transparent crystal 114 is made of glass or plastic.

The transparent crystal 114 is press fit with an intervening plastic or metal pressure ring 117 into the watch case 131. A back cover 115 is screwed into the watch case 113 with an intervening seal 118. The inside of the watch case 113 is thus sealed.

The display panel 116 and decorative member 131 stacked on the display panel 116 surface are pressed against an annular rib 113A protruding to the inside of the watch case 113 through an intervening spacer 119, and held in place through an intervening pressure ring 120 by screwing the back cover 115 tightly.

The display panel 116 is a display panel with an image retention characteristic. In this fifth embodiment and the following embodiments, an electrophoretic display device is used by way of example as a display panel with an image retention characteristic. This display panel 116 thus displays the time, and the display state of the display panel 116 can be changed using operating buttons 121, 122 disposed on one side of the watch case 113 as shown in FIG. 21. The display panel 116 and watch case 113 together comprise a display unit 171 as an electronic component.

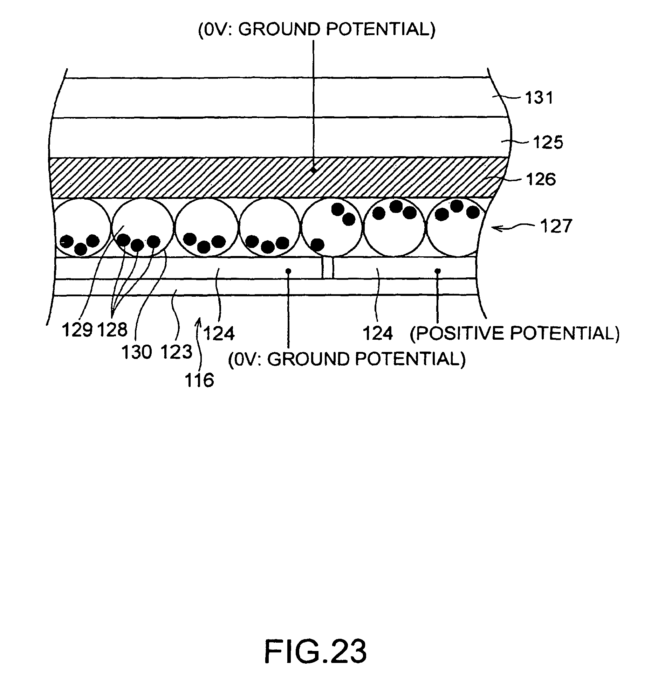

As shown in the schematic section view in FIG. 23, the electrophoretic display device comprises a display control panel comprising segment electrodes 124 on the surface of the packaging substrate 123, a transparent substrate 125 made of glass or plastic, a transparent electrode (common electrodes) 126 formed on the inside surface (bottom surface) of the transparent substrate 125, and an electrophoretic layer 127 disposed in the gap between the segment electrodes 124 and transparent electrode 126.

This electrophoretic layer 127 is a so-called one-particle electrophoretic layer composed of a plurality of microcapsules 130 filled with a white electrophoretic dispersion 129 and a plurality of positively charged electrophoretic particles (black particles) 128.

The transparent electrode 126 and segment electrodes 124 between which the electrophoretic layer 127 is rendered are connected to a display drive circuit (not shown in the figure). This display drive circuit applies a predetermined voltage to the transparent electrode 126 and segment electrodes 124 as controlled by a control device (not shown in the figure) rendered as a hardware or a hardware and software arrangement.

When voltage is applied to the transparent electrode 126 and segment electrodes 124 producing a field passing through the thickness of the electrophoretic layer 127, the electrophoretic particles 128 floating in the electrophoretic dispersion 129 [127, sic] inside the microcapsules 130 of the electrophoretic layer 127 move to either the front side or the back side of the display panel 116. The distribution of the electrophoretic dispersion 129 also changes in conjunction with this movement of the electrophoretic particles 128.

When the electrophoretic particles 128 gather at the front side of the display panel 116, the display panel 116 appears black through the transparent crystal 114. When the electrophoretic particles 128 gather at the back side of the display panel 116, the white electrophoretic dispersion 129 moves to the front side of the display panel 116, and the display panel 116 therefore appears white through the transparent crystal 114.

For example, if the transparent electrode 126 is held at 0 V (ground potential) and the segment electrodes 124 are positively charged, an electric field is produced from the positive segment electrodes 124 to the transparent electrode 126 held at 0 V. This causes the positively charged electrophoretic particles 128 to move to the transparent electrode 126 and thus causes the white electrophoretic dispersion to move to the segment electrode 124 side. The microcapsules 130 thus appear black when seen from the face. Conversely, while not shown in FIG. 23, if the transparent electrode 126 is positively charged and the segment electrodes 124 held at 0 V, the positively charged electrophoretic particles 128 move to the segment electrodes 124. As a result, the microcapsules 130 appear white when seen from the face because of the white electrophoretic dispersion 129. When there is no potential difference between the transparent electrode 126 and segment electrodes 124, the electrophoretic particles 128 do not move, the display color of the segment does not change, and the previous display state is retained (held).

Movement of the electrophoretic particles 128 can be impaired if moisture (moisture from the air) penetrates the display panel 116, and the display panel 116 is therefore preferably sealed or otherwise treated to prevent moisture penetration.

This electrophoretic display device comprises four segments 124A for digitally displaying the time (hour and minute), and two segments 124B for displaying a ":" (colon) between the hour and minute.

The segments 124A have seven segments for displaying numbers. So that the digital display of the hour and minute can be presented with black characters on a white background or white characters on a black background in this fifth embodiment of the invention, the display of white and black can also be switched around the segments 124A. More specifically, in addition to segment electrodes 124 corresponding to segments 124A and 124B, the display panel 116 in this wristwatch 110 also has a background segment electrode (not shown in the figure) corresponding to the background area outside segments 124A and 124B on the surface of the packaging substrate 123.

If the transparent electrode 126 is positively charged and all segment electrodes are held at 0 V, the electrophoretic particles 128 in all microcapsules 130 move to the back and the entire surface of the display panel 116 appears white. Conversely, if the transparent electrode 126 is held at 0 V and all segment electrodes are positively charged, the electrophoretic particles 128 in all microcapsules 130 move to the front and the entire surface of the display panel 116 appears black.

In order to display black numbers in the segments 124A against a surrounding white background, the display panel 116 is set to display white overall, the transparent electrode 126 is switched from a positive potential to 0 V, and of the seven segment electrodes 124 [24, sic] in each of the segments 124A, the segment electrodes 124 [24, sic] required to display the hour and minute are switched from 0 V to a positive potential.

In order to display white numbers in the segments 124A against a surrounding black background, the display panel is set to display white overall, the transparent electrode 126 is switched from a positive potential to 0 V, and of the seven segment electrodes 124 [24, sic] in each of the segments 124A, all of the segment electrodes 124 [24, sic] (including the background segment electrode) other than those required to display the hour and minute are switched from a positive potential to 0 V.

In order to change the display color of the hour and minute from black to white or from white to black, all of the display panel 116 is first set to display white and only the required display parts are then switched to display black. It will also be obvious that the display panel 116 could first be set to display black overall and only the required display parts could then be switched to display white.

An electrophoretic display device covers the entire area of the display panel 116 in this fifth embodiment of the invention with a transparent substrate 125 disposed on the face side and the decorative member 131 described above disposed on top of the transparent substrate 125. The decorative member 131 in this fifth embodiment of the invention covers all of the transparent substrate 125 with a uniform thickness.

A transparent sheet with a white coating made of white mother-of-pearl can be used for the decorative member 131. This enables embellishing the display of the wristwatch 110 as shown in FIG. 24A and FIG. 24B.

As shown in FIG. 24A, for example, the segmented numbers 133 presented by the segments 124A (FIG. 21) could be black and the background 132 white. In this arrangement the white color presented by the electrophoretic dispersion 129 combines with the transparent white mother-of-pearl in the decorative member 131 to display the white color of real mother-of-pearl in the background 132. In addition, the refractivity of the mother-of-pearl causes the segmented numbers 133 of the black hour and minute display to appear as black numbers floating on a mother-of-pearl surface.

As shown in FIG. 24B, the background 132 could be black and the segmented numbers 133 displayed white. In this case the black color of the electrophoretic particles 128 combines with the transparent white mother-of-pearl and thus appears as black mother-of-pearl. The white segmented numbers 133 thus appear as white numbers floating on the surface of black mother-of-pearl.

The decorative member 131 is preferably a transparent sheet with a white coating of processed white mother-of-pearl, and is treated for moisture resistance.

By thus rendering the decorative member 131 moisture resistant, the display panel 116 can be protected if, for example, the wristwatch 110 is accidentally dropped in water and moisture gets inside the transparent crystal 114. More specifically, by covering the display panel 116 with a moisture resistant decorative member 131, moisture that gets inside the transparent crystal 114 can be prevented from penetrating the display panel 116, and the reliability of the display panel 116 can be improved.

Cellel (R), a super high moisture barrier sheet manufactured by Kureha Corporation, can be used as the decorative member 131, for example. Cellel (R) is a multilayer film for overlay applications of which the surface layer provides moisture resistance, chemical resistance, soiling resistance, and UV protection, and the inside layer is a hot melt material, and applied to the transparent substrate 125 by thermal bonding.

If the moisture resistant decorative member 131 is a multilayer film, for example, and a layer near the surface is embellished with transparent coloring or by printing (back printing) a transparent design, a variety of design effects combined with the display presented by the display panel 116, i.e., electrophoretic display device, can be provided in the same way as when a transparent sheet with a white mother-of-pearl coating is used.

A wristwatch 110 according to this fifth embodiment of the invention can thus digitally display the time by means of a display panel 116 having an image retention characteristic and effectively embellish the digital display presented by the display panel 116 by overlaying an ornamental decorative member 131 to the display panel 116.

Variation, a three-dimensional appearance, and a high quality feel can thus be imparted to a decorative display. Combining the ornamental effect of the decorative member 131 with the display of the display panel 116 thus provides a display with attractive variation overall. In addition, stacking the decorative member 131 over the display panel 116 renders the particularly attractive visual effect of causing content presented on the display panel 116 to appear floating inside the decorative member 131 due to refraction.

Furthermore, because content displayed on the display panel 116 can be seen through the decorative member 131, the decorative member 131 does not appear to be a separate layer and the display unit appears to be a single piece. Furthermore, because the display panel 116 has an image retention characteristic, a highly ornamental display can be rendered over the entire face of the wristwatch 110 with little power consumption.

### * Sixth embodiment

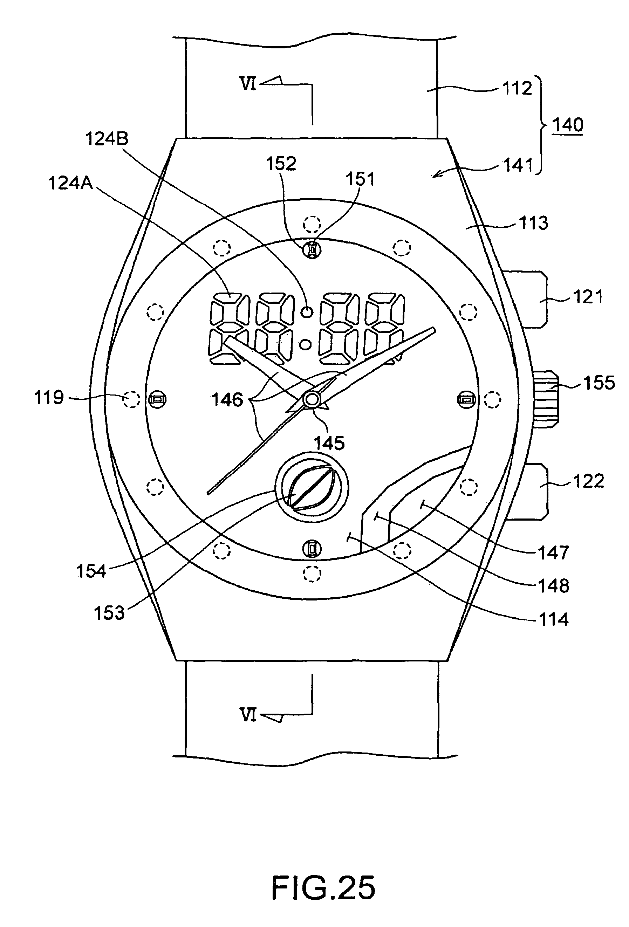

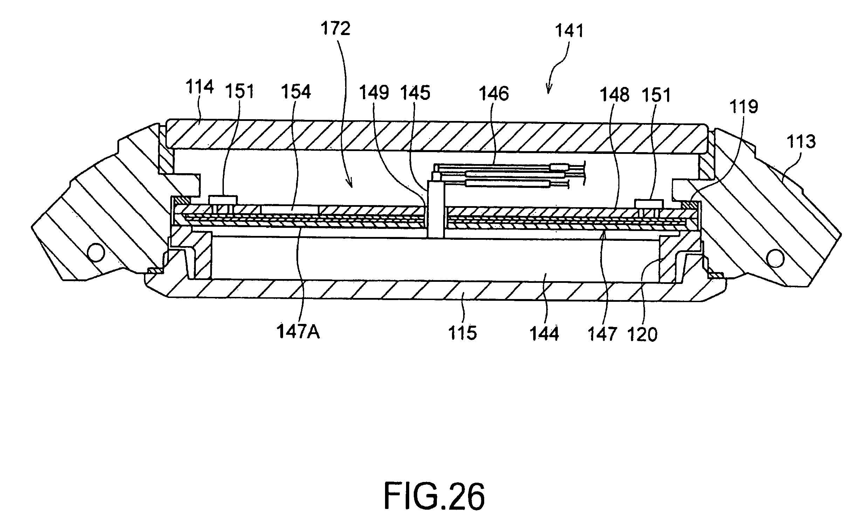

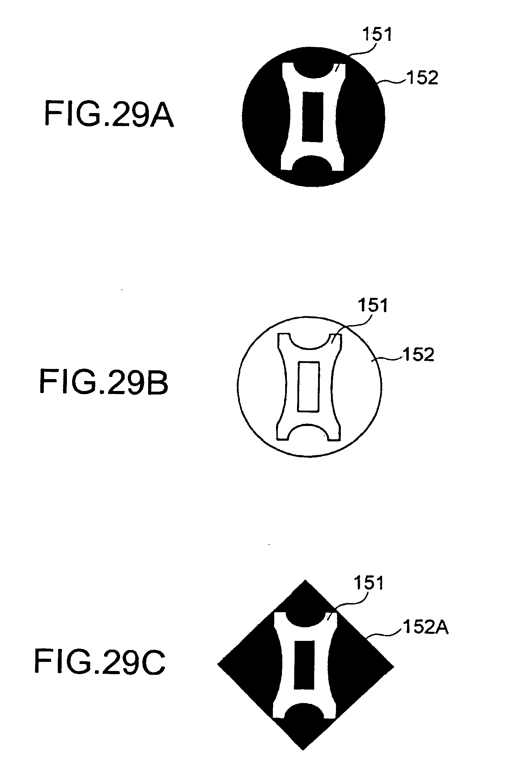

FIG. 25 to FIG. 29A, FIG. 29B, and FIG. 29C show a wristwatch 140 according to a sixth embodiment of the invention. FIG. 25 is a front view of the wristwatch 140, and FIG. 26 is a section view through VI-VI in FIG. 25.

Note that like parts in the fifth embodiment and this sixth embodiment are identified by like reference numerals, and further description thereof is omitted in the following description focusing on the differences between the embodiments.

The wristwatch 140 comprises a timepiece 141 and a wristband 112 attached to the timepiece 141. The timepiece 141 comprises a movement 144 inside the watch case 113, analog hands 146 attached to the drive shaft 145 of the movement 144, and a display panel 147 located between the movement 144 and analog hands 146 as shown in FIG. 26.

Similarly to the display panel 116 shown in FIG. 21, the display panel 147 is a display panel with an image retention characteristic, and more specifically is an electrophoretic display device. A decorative member 148 is provided as ornamentation over the surface of the display panel 147. A through-hole 149 is formed in the display panel 147 and decorative member 148, and the drive shaft 145 passes through this through-hole 149. The display panel 147 and decorative member 148 disposed over the display panel 147 together constitute a display unit 172 as an electronic component.

A crown 155 for adjusting the movement 144 is disposed to the watch case 113 (see FIG. 25, FIG. 26).

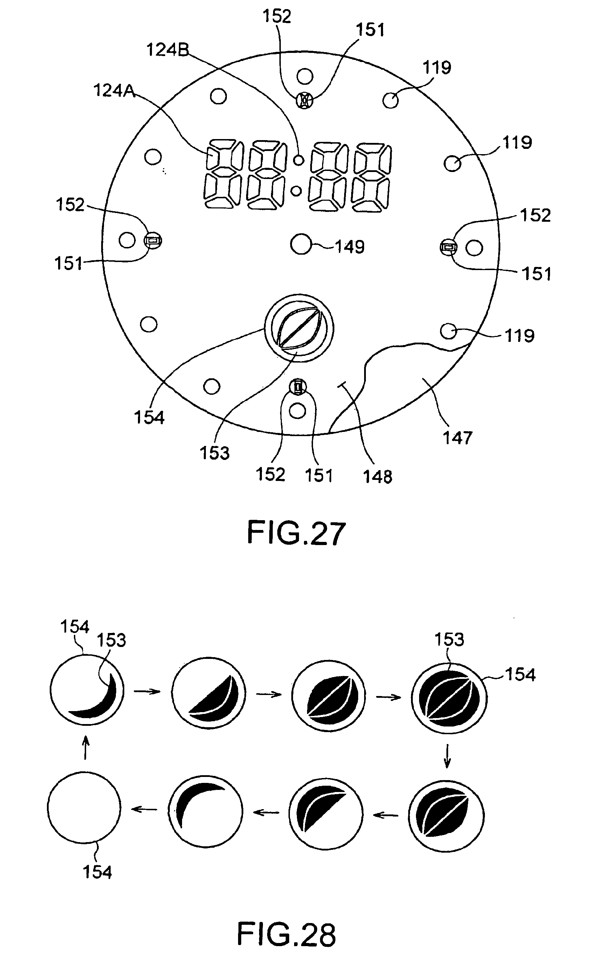

FIG. 27 is a front plan view of the display panel 147 on the surface of which the decorative member 148 is overlaid. The display panel 147 is comprised and operates in the same way as the display panel 116 in the fifth embodiment of the invention, and further description of the construction and operation is therefore omitted.

As shown in FIG. 27, the display panel 147 comprises segments 124A and 124B for displaying the hour and minute. These segments 124A and 124B are located on the face of the packaging substrate 147A shown in FIG. 26 in the top half of the dial of the wristwatch 140, that is, above the through-hole 149 as shown in FIG. 27.

The display panel 147 also has a four-part display segment 153 as a special display unit for displaying moon phases, that is, the new moon, three-quarter moon, half moon, and new moon. This four-part segment 153 is located on the front of the packaging substrate 147A (which corresponds to the packaging substrate 123 in FIG. 23) in the bottom half of the dial of the wristwatch 140, that is, below the through-hole 149 as shown in FIG. 27.

FIG. 28 shows the moon phases displayed by the four-part segment 153. As shown in FIG. 28, the four-part segment 153 separately displays the waxing and waning phases of the moon.

As shown in FIG. 27, the decorative member 148 has a through-hole 154 enabling direct viewing of the moon phase display of the four-part segment 153. A round recess is formed at a position over the through-hole 154 in the surface of the display panel 147 so that the moon phase display appears three-dimensionally. Because water resistance and moisture resistance are lost when the through-hole 154 is provided even if the decorative member 148 is made water resistant and moisture resistant, a transparent window can be provided in the decorative member 148 instead of a through-hole 154. The area around this window can also be rendered opaque. As described in the fifth embodiment, the decorative member 148 can be made transparent with the surface or inside colored or featuring a particular design to enable ornamentation in combination with the background display of the display panel 147.

Small holes are also opened in the decorative member 148 at positions corresponding to 12:00, 3:00, 6:00, and 9:00 on the face of the wristwatch 140. Symbolic markings 151 are implanted as additional ornamentation in these holes. These symbolic markings 151 may be metal or plastic, for example, and have the shape of letters, symbols, or other graphic elements.

The four symbolic markings 151 disposed to this wristwatch 140 are called "batons" on a timepiece, and denote the hour positions indicated by analog hands 146 instead of numerals on the dial of the timepiece. In addition to functioning as indices to the positions of the analog hands 146, these symbolic markings 151 (batons) are also design elements.

The symbolic markings 151 are preferably smaller than or the same size as the holes, and the display panel 147 is exposed around the symbolic markings 151. If the content presented on the display panel 147 in these exposed areas is related to the symbolic markings 151, the combination of the symbolic markings 151 and the background image enhances the design of the symbolic markings 151 and affords a variety of ornamental effects.

More particularly, if the symbolic marking 151 is white and the display panel 147 is driven so that the background 152 is black, the symbolic marking 151 appears etched into the background. The background 152 can also be changed to white as shown in FIG. 29B. The display can also be switched between that shown in FIG. 29A and that shown in FIG. 29B.

If the symbolic markings 151 are smaller than the holes opened in the decorative member 148, the display state of the display panel 147 can be changed so that the symbolic markings 151 appears as a white void floating against a diamond background 152A as shown in FIG. 29C.

The shape and color of the symbolic markings 151 are not varied in the examples shown in FIG. 29A to FIG. 29C, but different designs can be rendered by changing the display of the display panel 147. A three-dimensional quality, distinction, and high quality can thus be achieved in the dial of the wristwatch 140.

The symbolic markings 151 can also be rendered by applying a metallic label to the decorative member 148 or by printing. Alternatively, plural symbolic markings 151 of different designs can be disposed in the holes in the decorative member 148. For example, twelve symbolic markings 151 featuring the signs of the Zodiac can be disposed to the hour positions on the wristwatch 140. In this case a distinctive design can be achieved by rendering the eyes in each of the twelve Zodiac signs transparent in the symbolic markings 151, and driving the display panel 147 to invert and display white in the background of the symbolic markings 151 while displaying white or black in the eyes of the Zodiac symbols.

As described above, the wristwatch 140 in this sixth embodiment of the invention is an analog timepiece that uses an analog display to indicate the time using analog hands 146 driven by the movement 144 and symbolic markings 151. This wristwatch 140 also has a function for digitally displaying the hour and minute and a function for displaying the moon phases on the display panel 147.

This wristwatch 140 also has an opaque decorative member 148 and renders a through-hole 154 in the decorative member 148 so that the four-part segment 153 can be seen, thereby making the moon phase display visible and enhancing the design of the moon phase display.

Holes are also rendered in the decorative member 148 at the 12:00, 3:00, 6:00, and 9:00 positions on the face of the wristwatch 140, and symbolic markings 151 are implanted in these holes. Design variations can be imparted by driving the display panel 147 to change the display in the background 152 surrounding the symbolic markings 151 [152, sic].

The operation and effect afforded by the identical parts in the fifth embodiment are likewise afforded by this sixth embodiment of the invention, and further description of the operation and effect afforded by the arrangement of the fifth embodiment is omitted.

### * Seventh embodiment

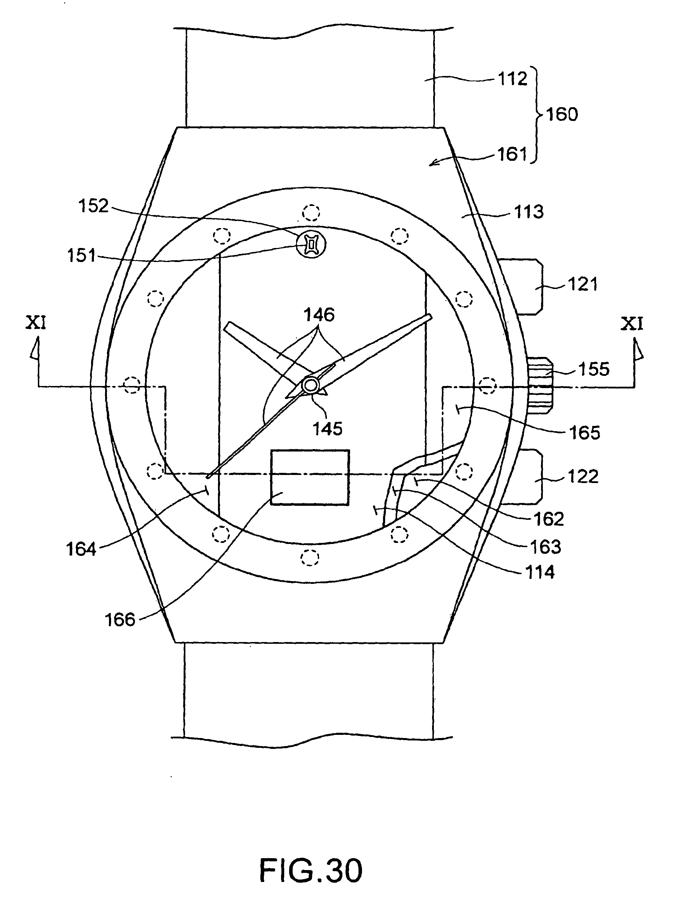

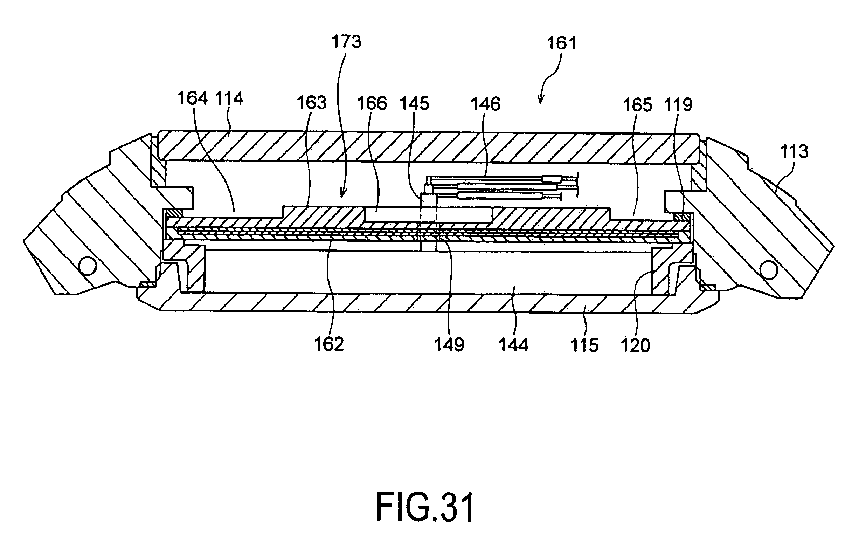

FIG. 30 to FIG. 32 show a wristwatch 160 [110, sic] according to a seventh embodiment of the invention. FIG. 30 is a front plan view of the wristwatch 160, and FIG. 31 is a section view through line XI-XI in FIG. 30.

Note that like parts in the fifth and sixth embodiments and this embodiment are identified by like reference numerals, and further description thereof is omitted in the following description focusing on the differences between the embodiments.

The wristwatch 160 comprises a timepiece 161 and a wristband 112 attached to the timepiece 161. The timepiece 161 comprises a movement 144 inside the watch case 113, analog hands 146, and a display panel 162 located between the movement 144 and analog hands 146 as shown in FIG. 31.

Similarly to the display panel 147 shown in FIG. 25, the display panel 162 is a display panel with an image retention characteristic, and more specifically is an electrophoretic display device. A decorative member 163 is provided as ornamentation over the surface of the display panel 162. A through-hole 149 is formed in the display panel 162 and decorative member 163, and the drive shaft 145 passes through this through-hole 149. The display panel 162 and decorative member 163 disposed over the display panel 162 together constitute a display unit 173 as an electronic component.

As shown in FIG. 30, raised and recessed portions are formed in the surface of the decorative member 163 of this wristwatch 160. More specifically, bowed recesses 164 and 165 of different sizes are formed on the left and right side portions of the decorative member 163. A rectangular recess 166 is formed between these bowed recesses 164 and 165. This rectangular recess 166 is located in the bottom portion of the dial of this wristwatch 160 as shown in FIG. 30. This rectangular recess 166 is deeper and more three-dimensional than the bowed recesses 164 and 165, for example.

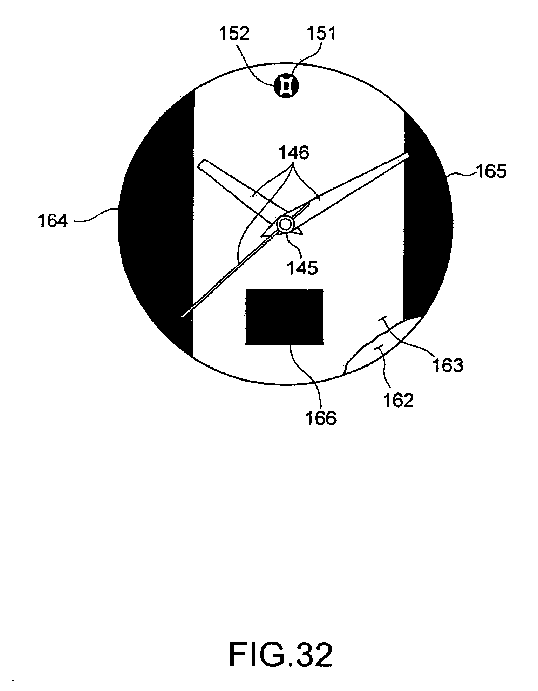

The display panel 162 has segment electrodes disposed only in the portions corresponding to the bowed recesses 164 and 165 and rectangular recess 166 of the decorative member 163. As shown in FIG. 32, the display panel 162 displays where the display panel 162 overlaps the ornamentation afforded by the bowed recesses 164 and 165 and rectangular recess 166 of the decorative member 163. The display panel 162, for example, displays black throughout the area of the bowed recesses 164 and 165 and rectangular recess 166.

The edges of the rectangular recess 166 are also coated black so that the rectangular recess 166 has a thick black frame as shown in FIG. 30. This enhances the black displayed by the display panel 162 at a position corresponding to the rectangular recess 166 as shown in FIG. 32. The moon phases, weekday, hour and minute, or other content can be displayed by the display panel 162 exposed in the bowed recesses 164 and 165 and rectangular recess 166.

As described above, the wristwatch 160 according to this seventh embodiment of the invention is an analogy timepiece that displays the time by means of symbolic markings 151 and the analog hands 146 driven by the movement 144. The wristwatch 160 is also afforded a three-dimensional feel by means of the raised and recessed portions rendered in the surface of the decorative member 163, and provides complementary ornamentation by means of the display panel 147 displaying a background in these raised and recessed portions.

The operation and effect afforded by the identical parts in the fifth and sixth embodiment are likewise afforded by this seventh embodiment of the invention, and further description of the operation and effect afforded by the arrangement of the fifth and sixth embodiment is omitted.

These embodiments of the invention are described by way of example only, and it will be obvious that the invention can visual effect varied in many ways without departing from the scope of the accompanying claims. For example, in the first to seventh embodiments the decorative member may be transparent, sufficiently transparent that images displayed on the display panel can be seen, colorless, or tinted some color. More specifically, the decorative member must only be transparent and a colorless, transparent, flat member is used by way of example, but a tinted transparent member or a member with low transparency (such as a translucent) can be used. A separate member made of metal, for example, can also be disposed on this decorative member for additional ornamentation.

The first to fourth embodiments are also described as using blue electrophoretic particles 35 in the display panel 51, but the invention is not so limited and black electrophoretic particles can be used. Likewise, the fifth and sixth embodiments are described as using black electrophoretic particles, but blue electrophoretic particles can be used in these embodiments.

The first to seventh embodiments are described as having the display panel with an image retention characteristic covering all or part of the dial of a timepiece, but the display panel can cover any desired portion of the dial. A color filter can also be disposed between the display panel and decorative member. Further alternatively, the display panel can be a rigid display panel or a flexible display panel.

An extremely wide range of images can be displayed on the display panel in the first to seventh embodiments, including calendar information such as the year, month, and day, a scale (including hour markings) to which the analog hands 21 to 23 point, time settings and counter values when a timer function is provided, a split time reading and timekeeper reading (including both values indicated digitally by numbers and letters, and a pictorial representation of analog hands) when a stopwatch function is provided, the alarm setting when an alarm clock function is provided, a virtual 24-hour display, a moon phase display, remaining battery capacity, direction, altitude, water depth, position, temperature, humidity, barometric pressure, a background image (including cartoon images), and various patterns, and the type and size of the displayed images is not limited in any way.

All but the fifth embodiment are described using an analog timepiece by way of example, but the invention is not so limited. Each of these embodiments can be rendered as a digital timepiece without analog hands and displaying the time by means of a display panel with an image retention characteristic. By overlaying the decorative member to the digital display, a visual effect related to the time display can be achieved, and a distinctive digital timepiece with an extremely attractive design can be provided.

An arrangement having hands to indicate the alarm setting in addition to the analog time hands can also be provided. When the current time reaches the alarm setting in this arrangement, the user can be informed that the alarm setting has been reached by changing the state of the display panel behind the alarm hands. A decorative member that emphasizes the display state of the display panel only in the area around the alarm hands can also be provided.

A wristwatch is used by way of example as the electronic device to which the present invention is applied in these embodiments, but the invention is not so limited as the invention can be applied to a mantle clock, a wall clock or grandmother clock, a pocket watch, or other type of timepiece. The invention can also be applied to a radio-controlled timepiece that receives a standard time signal (such as JJY) to automatically adjust the time.

The invention is also not limited to timepiece applications, and can be applied to other electronic devices having a display panel, including personal digital assistants (PDA), cell phones, printers, scanners, and notebook computers. When rendered as a portable device such as a timepiece, the invention is also not limited to wristwatches, and can be adapted to various other shapes, including necklaces, rings, and pendants.

The present invention can be applied as an electronic component that is used in an electronic device. These embodiments of the invention are described with the electronic device being driven by power from a primary battery, but the invention is not so limited and the electronic device can be driven by a secondary battery or commercial power. If a secondary battery is used, a power generating device can be provided to charge the secondary battery. This power generating device may be a self-winding power generator having a rotary pendulum disposed inside the timepiece so that kinetic energy from the user swinging his wrist, for example, causes the pendulum to rotate and generate power; a spring-driven power generator that drives the rotary pendulum by means of a spring that is wound by the crown, for example; a thermal power generator that generates power from the temperature difference (thermal energy) between one part and another part; or a solar power generator, for example.

## Claims

1. An electronic component comprising:
a display panel (51) having an image retention characteristic; and
a decorative member (52) disposed layered to the display panel and visibly passing the display state of at least a portion of the display panel,
wherein the decorative member is made from a moisture resistant material, **characterised in that**
a three-dimensional shape is formed on a surface of the decorative member by recessed portions (52B) in at least a portion of said surface in such a way that said display panel appears differently when viewed from different directions.

2. The electronic component described in claim 1, wherein the recessed portions (52B) comprising a plurality of sides of different slope are formed in the portion of the surface of the decorative member.

3. The electronic component described in claim 1, wherein the decorative member is a flat member.

4. The electronic component described in claim 1, wherein the display panel (51) is an electrophoretic display panel.

5. The electronic component described in claim 1, further comprising a through-hole for passing a drive member for driving analog hands (21, 22, 23) when analog hands are provided.

6. The electronic component described in claim 1, wherein the electronic component comprises the display panel comprising a display layer having the image retention characteristic, and a transparent layer covering the display side surface of the display layer; and
a three-dimensional shape formed in the transparent layer of the display panel.

7. An electronic device comprising
the electronic component according to claim 1, and
a display unit (5),
wherein the display unit (5) comprises the display panel (51).

8. The electronic device described in claim 7, further comprising analog hands (21, 22, 23) that are driven above the display area of the display unit for indicating time.

9. The electronic device described in claim 8,
wherein an image is displayed on the display panel (51) in an area overlapping the drive range of the analog hands.

10. The electronic device described in claim 7, wherein time is digitally displayed by the display panel.

11. The electronic device described in claim 7, wherein the electronic device is a timepiece having the display unit (5) disposed inside a timepiece case (2).

12. The electronic device described in claim 7, further comprising the display unit (5), analog hands driven above a display area of the display unit, and a movement for driving the analog hands, inside a timepiece case; and a through-hole (51A) rendered in the display panel (51) to pass a drive member for transferring drive power from the movement to the analog hands.

13. The electronic device described in claim 7, wherein the display panel is an electrophoretic display device.

14. The electronic device described in claim 7, wherein the display panel comprises a special display unit for presenting a special display including a moon phase display (153); and
the portion of the decorative member overlapping the special display unit is rendered as a through-hole or transparent window, and the portion of the decorative member not overlapping the special display unit is opaque.

15. The electronic device described in claim 7, wherein one or a plurality of complementary decorative members is disposed to the surface of the decorative member (52); and
the display panel (51) displays in an area surrounding the complementary decorative member.

16. The electronic device described in claim 7, wherein one or a plurality of recessed portions is formed on a surface of the decorative member; and
the display panel displays in areas corresponding to the recessed portions.

## Patentansprüche

1. Eine elektronische Komponente, umfassend:
ein Anzeigefeld (51) mit einer Bildhalteeigenschaft; und
ein dekoratives Teil (52), das geschichtet angeordnet ist auf dem Anzeigefeld, und sichtbar den Anzeigezustand von mindestens einem Anteil des Anzeigefelds durchlässt,
wobei das dekorative Teil aus einem feuchtigkeitsresistenten Material hergestellt ist,
**dadurch gekennzeichnet, dass**
eine dreidimensionale Form gebildet wird auf einer Oberfläche des dekorativen Teils durch mit Aussparungen versehenen Anteilen (52B) in mindestens einem Anteil der Oberfläche, auf solch eine Art und Weise, dass das Anzeigefeld unterschiedlich aussieht, wenn es aus unterschiedlichen Richtungen gesehen wird.

2. Die elektronische Komponente, beschrieben in Anspruch 1, wobei die mit Aussparungen versehenen Anteile (52B), umfassend eine Vielzahl von Seiten mit verschiedener Neigung, gebildet werden in dem Anteil der Oberfläche des dekorativen Teils.

3. Die elektronische Komponente, beschrieben in Anspruch 1, wobei das dekorative Teil ein flaches Teil ist.

4. Die elektronische Komponente, beschrieben in Anspruch 1, wobei das Anzeigefeld (51) ein elektrophoretisches Anzeigegerät ist.

5. Die elektronische Komponente, beschrieben in Anspruch 1, ferner umfassend ein Durchgangsloch zum Hindurchführen eines Antriebglieds zum Antreiben von analogen Zeigern (21, 22, 23), wenn analoge Zeiger bereitgestellt werden.

6. Die elektronische Komponente, beschrieben in Anspruch 1, wobei die elektronische Komponente das Anzeigefeld, umfassend eine Anzeigeschicht mit der Bildhalteeigenschaft, umfasst, und eine transparente Schicht, die die Anzeigenseitenoberfläche der Anzeigenschicht abdeckt; sowie
eine dreidimensionale Form, die gebildet wird in der transparenten Schicht des Anzeigefelds.

7. Ein elektronisches Gerät, umfassend
die elektronische Komponente nach Anspruch 1, und
eine Anzeigeeinheit (5),
wobei die Anzeigeeinheit (5) das Anzeigefeld (51) umfasst.

8. Das elektronische Gerät, beschrieben in Anspruch 7, ferner umfassend analoge Zeiger (21, 22, 23), die angetrieben werden über der Anzeigefläche der Anzeigeeinheit zum Kennzeichnen der Zeit.

9. Das elektronische Gerät, beschrieben in Anspruch 8,
wobei ein Bild angezeigt wird auf dem Anzeigefeld (51) in einem Bereich, der den Antriebsbereich der analogen Zeiger überlappt.

10. Das elektronische Gerät, beschrieben in Anspruch 7, wobei Zeit digital angezeigt wird durch das Anzeigefeld.

11. Das elektronische Gerät, beschrieben in Anspruch 7, wobei das elektronische Gerät eine Uhr ist mit der Anzeigeeinheit (5), die innerhalb eines Uhrengehäuses (2) angeordnet ist.

12. Das elektronische Gerät, beschrieben in Anspruch 7, ferner umfassend die Anzeigeeinheit (5), analoge Zeiger, die angetrieben werden über einer Anzeigefläche der Anzeigeeinheit, und eine Bewegungseinrichtung zum Antreiben der analogen Zeiger, innerhalb eines Uhrengehäuses; und
ein Durchgangsloch (51A), das vorgesehen ist in dem Anzeigefeld (51) zum Durchlassen eines Antriebsglieds zum Transferieren von Antriebsleistung von der Bewegungseinrichtung an die analogen Zeiger.

13. Das elektronische Gerät, beschrieben in Anspruch 7, wobei das Anzeigefeld ein elektrophoretisches Anzeigegerät ist.

14. Das elektronische Gerät, beschrieben in Anspruch 7, wobei das Anzeigefeld eine spezielle Anzeigeeinheit umfasst zum Präsentieren einer speziellen Anzeige einschließlich einer Mondphasenanzeige (153); und
der Anteil des dekorativen Teils, das die spezielle Anzeigeeinheit überlappt, ausgebildet ist als ein Durchgangsloch oder transparentes Fenster, und der Anteil des dekorativen Teils, der die spezielle Anzeigeeinheit nicht überlappt, undurchsichtig ist.

15. Das elektronische Gerät, beschrieben in Anspruch 7, wobei ein oder eine Vielzahl von komplementären dekorativen Teilen angeordnet sind auf der Oberfläche des dekorativen Teils (52); und
das Anzeigefeld (51) in einem Bereich umgebend das komplementäre dekorative Teil anzeigt.

16. Das elektronische Gerät, beschrieben in Anspruch 7, wobei ein oder eine Vielzahl von mit Aussparungen versehenen Anteilen gebildet wird auf einer Oberfläche des dekorativen Teils; und
das Anzeigefeld in Bereichen entsprechend den mit Aussparungen versehenen Anteilen anzeigt.

## Revendications

1. Composant électronique comprenant:
un panneau d'affichage (51) ayant une caractéristique de rétention d'images; et
un organe décoratif (52) disposé en couche par rapport au panneau d'affichage et passant de manière visible l'état d'affichage d'au moins une portion du panneau d'affichage,
où l'organe décoratif est fait d'un matériau résistant à l'humidité, **caractérisé en ce que**
une forme tridimensionnelle est formée sur une surface de l'organe décoratif par des portions évidées (52B) dans au moins une portion de ladite surface d'une telle manière que ledit panneau d'affichage apparaisse différemment lorsqu'on le regarde de différentes directions.

2. Composant électronique décrit dans la revendication 1, dans lequel les portions évidées (52B) comprenant une pluralité de côtés d'une pente différente sont formées dans la portion de la surface de l'organe décoratif.

3. Composant électronique décrit dans la revendication 1, dans lequel l'organe décoratif est un organe plat.

4. Composant électronique décrit dans la revendication 1, dans lequel le panneau d'affichage (51) est un panneau d'affichage électrophorétique.

5. Composant électronique décrit dans la revendication 1, comprenant en plus un trou traversant pour faire passer un organe d'entraînement afin d'entraîner des aiguilles analogiques (21, 22, 23) lorsque les aiguilles analogiques sont pourvues.

6. Composant électronique décrit dans la revendication 1, dans lequel le composant électronique comprend le panneau d'affichage comprenant une couche d'affichage ayant la caractéristique de rétention d'images, et une couche transparente couvrant la surface latérale d'affichage de la couche d'affichage; et
une forme tridimensionnelle formée dans la couche transparente du panneau d'affichage.

7. Dispositif électronique comprenant
le composant électronique selon la revendication 1, et
une unité d'affichage (5),
où l'unité d'affichage (5) comprend le panneau d'affichage (51).

8. Dispositif électronique décrit dans la revendication 7, comprenant en plus des aiguilles analogiques (21, 22, 23) qui sont entraînées au-dessus de la zone d'affichage de l'unité d'affichage pour indiquer le temps.

9. Dispositif électronique décrit dans la revendication 8,
dans lequel une image est affichée sur le panneau d'affichage (51) dans une zone chevauchant la gamme d'entraînement des aiguilles analogiques.

10. Dispositif électronique décrit dans la revendication 7, dans lequel le temps est affiché de manière numérique par le panneau d'affichage.

11. Dispositif électronique décrit dans la revendication 7, dans lequel le dispositif électronique est un appareil horaire ayant l'unité d'affichage (5) disposée à l'intérieur d'un boîtier (2) de l'appareil horaire.

12. Dispositif électronique décrit dans la revendication 7, comprenant en plus l'unité d'affichage (5), des aiguilles analogiques entraînées au-dessus d'une zone d'affichage de l'unité d'affichage, et un organe de mouvement pour entraîner les aiguilles analogiques, à l'intérieur d'un boîtier de l'appareil horaire; et
un trou traversant (51A) pourvu dans le panneau d'affichage (51) pour faire passer un organe d'entraînement afin de transférer une puissance d'entraînement à partir de l'organe de mouvement vers les aiguilles analogiques.

13. Dispositif électronique décrit dans la revendication 7, dans lequel le panneau d'affichage est un dispositif d'affichage électrophorétique.

14. Dispositif électronique décrit dans la revendication 7, dans lequel le panneau d'affichage comprend une unité d'affichage spécial pour présenter un affichage spécial incluant un affichage de phases de lune (153); et
la portion de l'organe décoratif chevauchant l'unité d'affichage spécial est pourvue en tant que trou traversant ou fenêtre transparente, et la portion de l'organe décoratif qui ne chevauche pas l'unité d'affichage spécial est opaque.

15. Dispositif électronique décrit dans la revendication 7, dans lequel un ou une pluralité d'organes décoratifs complémentaires est/sont disposé(s) à la surface de l'organe décoratif (52); et
le panneau d'affichage (51) effectue un affichage dans une zone entourant l'organe décoratif complémentaire.

16. Dispositif électronique décrit dans la revendication 7, dans lequel une ou une pluralité de portions évidées est/sont formée(s) sur une surface de l'organe décoratif; et
le panneau d'affichage effectue un affichage dans des zones correspondant aux portions évidées.
